# EUROPEAN PATENT SPECIFICATION

(11) **EP 1 818 087 B1**
(45) Date of publication and mention of the grant of the patent: **20.01.2016**
(21) Application number: 05811722.7
(22) Date of filing: 29.11.2005
(51) Int. Cl.: A63F 13/214, A63F 13/90, A63F 13/27

(54) **GAMING MACHINE**
SPIELAUTOMAT
MACHINE DE JEU

(30) Priority: 03.12.2004 JP 2004351651
(43) Date of publication of application: 15.08.2007
(73) Proprietor: SEGA Games Co., Ltd., Tokyo 144-8531 (JP)
(72) Inventor: KAJI, Toshiyuki c/o SEGA Corporation, 1448531 (JP); YAMAUCHI, Takao c/o SEGA Corporation, Tokyo 1448531 (JP); HIROSE, Gou c/o SEGA Corporation, Tokyo; 1448531 (JP)
(74) Representative: Bohnenberger, Johannes
(86) International application number: PCT/JP2005/021901
(87) International publication number: WO 2006/059611

(56) References cited:
- EP-A1- 0 911 654
- EP-A1- 1 319 430
- WO-A1-00/16863
- JP-A- H1 157 216
- JP-A- 2000 305 079
- JP-A- 2002 102 529
- JP-A- 2002 247 602
- JP-A- 2002 301 264
- JP-A- 2004 012 712
- US-A- 5 982 352
- US-A1- 2004 070 824
- LEIBE B ET AL: "The Perceptive Workbench: toward spontaneous and natural interaction in semi-immersive virtual environments" VIRTUAL REALITY, 2000. PROCEEDINGS. IEEE NEW BRUNSWICK, NJ, USA 18-22 MARCH 2000, LOS ALAMITOS, CA, USA,IEEE COMPUT. SOC, US LNKD- DOI:10.1109/VR.2000.840358, 18 March 2000 (2000-03-18), pages 13-20, XP010378965 ISBN: 978-0-7695-0478-0

## Description

### TECHNICAL FIELD

The present invention relates to a game machine that uses a table-type projector/imaging device having means for projecting an image from light emitted from a projector on a transmission screen set on a table surface, and means for imaging and reading out the information recorded on the back side of an information recording medium placed on the screen.

### BACKGROUND ART

Conventionally, table-type projector devices have been proposed, in which the projector emits a light beam to project an image on a horizontally arranged transmission screen. The table-type projector device usually has a structure wherein the light path of the light beam emitted from the projector (hereinafter "emitted light") is bent by a mirror so that the image is formed on the transmission screen, and it is used in situations where presentations or the like are given.

It has become popular recently, when giving a presentation or the like, to connect a personal computer to the projector and to display data stored in the memory device of the personal computer, such as color documents, photos, or moving images, on the screen. To give such a presentation or the like using the table-type projector device, the following issues need to be addressed:
1) Since the screen is set horizontally, it is subjected to the load from the presenter's hand or documents or the like placed on the screen. Therefore the screen needs to have sufficient strength.
2) Since the screen is arranged horizontally in the table-type projector device, it is susceptible to external light, in particular the light on the ceiling, because of which the resolution of the image projected on the screen tends to decrease. This led to the problem that images cannot be formed clearly unless the room in which the table-type projector device is installed is made dark.

The inventions disclosed in the following patent documents 1 and 2 have been proposed to solve these problems associated with the table-type projector device.
Patent Document 1: Japanese Patent Laid-Open Publication No. 2000-305079
Patent Document 2 : Japanese Patent Laid-Open Publication No. 2004-12712
Patent Document 3: Japanese Patent Laid-Open Publication No. 2002-301264

Patent Document 1 describes a rear side projection type display device in which the transmission screen is made of reinforced glass or reinforced plastic so that it can also serve as the tabletop. Patent Document 1 further describes that an anti-reflection coat is appliedon the surface of the transmission screen made of reinforced glass or the like to prevent reflection of external or ambient light.

Patent Document 2 proposes a table-type display device in which images are projected on a horizontally arranged screen with high resolution using a plurality of projectors. The document describes that the screen used in this table-type display device is made of a transparent base member that is employed to minimize deflection, an optical sheet for homogenizing light beams emitted from the plurality of projectors, and a diffusion screen on which the images are formed. Patent Document 2 further discloses that the transparent base member is made of any of laminated glass, thermally tempered glass, or acrylic plate, the optical sheet is made of any of a Fresnel lens, a lenticular sheet, or a bead screen, and the diffusion screen is made of either laminated glass or thermally tempered glass provided with a diffusion layer.

Patent Document 3, which is a patent application previously filed by the inventors of the present invention, describes a card game system which includes a transparent card placement panel, on which trading cards are placed, so that identification data recorded on the back side of the cards is read out using an image sensor installed inside the housing and used for the control of the game.

### DISCLOSURE OF THE INVENTION

### PROBLEMS TO BE SOLVED BY THE INVENTION

Patent Document 1 mentioned above discloses that, in the rear side projection type display device, reinforced glass is used for increasing the strength of the screen, and that an anti-reflection coat is applied on the surface of this reinforced glass to prevent reflection of external or ambient light. However, the document does not mention provision of any means for further increasing the resolution of images projected on the screen. Also, the rear side projection type display device described in Patent Document 1 does not include means for imaging the information recorded on the back side of an information recording medium such as a card placed on the screen.

Patent Document 2 mentioned above discloses that, in the table-type display device, the screen is made of a transparent base member made of thermally tempered glass or the like, an optical sheet formed on the upper face of the transparent base member, and a diffusion screen formed on the upper face of the optical sheet. However, the document lacks any reference to the specific structure of the diffusion screen, in particular of the diffusion layer. Also, as with Patent Document 1, the table-type display device described in Patent Document 2 does not include means for imaging the information recorded on the back side of an information recording medium such as a card placed on the screen.

The card placement panel of the card game system described in Patent Document 3 mentioned above is used for placing and moving trading cards thereon and as means for reading out the identification data recorded on the back side of the cards using infrared light for the control of the game. Thus, the card placement panel described in Patent Document 3 is not used as means of displaying images in accordance with the progress of the card game to increase the stage effects.

Accordingly, an object of the present invention is to provide a game machine including means for imaging and reading in the information recorded by printing or the like on the back side of an information recording medium placed on a transmission screen, in order to broaden the applications for the conventional table-type projector device described above. This game machine, in particular, can be embodied as a game machine that uses play items such as trading cards.

### MEANS FOR SOLVING THE PROBLEMS

The present invention provides a game machine having an image projection device that comprises:
a housing having an upper panel constituting a transmission screen configured so that an image, projected from inside the housing can be seen from outside the housing, the transmission screen including at least a visible light absorption layer formed of carbon-free mixed inks of cyan, magenta, and yellow and having a fine concavo-convex surface configured so that play items, each having a code pattern at a bottom face thereof, can readily slide with reduced friction along the surface of the upper panel and can be readily removed from the surface of the upper panel;
memory means in which image data configured to provide a variety of images relevant to a game to be played on the game machine is stored;
a projector disposed in the housing and configured to project the image on the upper panel;
infrared light emission means disposed in the housing and configured to provide infrared light through the upper panel, so as to illuminate with the infrared light the bottom faces of play items when placed on the upper panel;
infrared light detecting means disposed in the housing and configured to detect infrared light reflected from the bottom faces of the play items in the housing through the upper panel constituting the transmission screen; and
a control unit configured to analyse data indicative of respective play items placed on the upper panel based on the code patterns detected by the infrared light detecting means, to control progress of a game based on the analysed data indicative of the respective play items, to control progress of the game using the play items placed on the upper panel and to cause the projector to project to the upper panel the image which is generated based on data selected from the data of the variety of images stored in the memory means in accordance with a process of the game.

According to the present invention, the game machine includes a mirror arranged inside the housing for reflecting the light emitted from the projector towards the transmission screen, and for reflecting the infrared light emitted from the infrared light emission means to a direction towards the infrared light detecting means.

According to the present invention, the transmission screen of the game machine includes:
a transparent plate base material;
a light diffusion layer formed on an upper face of the plate base material for diffusing the emitted light;
the visible light absorption layer formed on an upper face of the light diffusion layer; and
a light diffusion sheet member provided on an upper face of the visible light absorption layer for diffusing external light from outside the game machine.

According to the present invention, the projector in the game machine is provided with a filter for cutting infrared light contained in the light emitted form the projector.

According to the present invention, the light diffusion sheet member in the game machine is formed with a fine concavo-convex structure on the surface thereof.

### EFFECTS OF THE INVENTION

The present invention provides the following advantages:
1) The transmission screen that forms part of the game machine of the present invention is made up of a transparent plate base material such as glass, a light diffusion layer formed on the upped face of the plate base material, a visible light absorption layer formed on the upper face of the light diffusion layer and made of carbon-free mixed inks of cyan, magenta, and yellow, and a light diffusion sheet member arranged on the upper face of the visible light absorption layer and made of a transparent synthetic plastics such as polycarbonate. Therefore, while the transmission screen transmits infrared light, it diffuses visible light. This enables projection of clear and high-contrast images on the transmission screen from the light emitted from the projector.
2) The transmission screen of the present invention can be made very thin, the total sum of thickness of the light diffusion layer, the visible light absorption layer, and the light diffusion sheet member being 1mm or less. This enables high-precision infrared light imaging and decoding of the information that has been recorded by printing or the like on the back side of the information recording medium such as a play item placed on the transmission screen.
3) The light diffusion sheet member that forms part of the transmission screen is formed with a fine concavo-convex structure on the upper surface. This fine concavo-convex structure has the function of diffusing external light, so that sharp images are formed on the transmission screen. The transmission screen according to the invention can be used, for example, as a card placement panel of a game machine, in which case this fine concavo-convex structure provides the function of preventing adhesion between the play item such as a trading card and the panel. This allows the player to move the play item very smoothly on the card placement panel in a sliding manner to play the game.
4) With the advantages 1 to 3 described above, the invention can provide a novel game machine, with the transmission screen of the present invention being used as a card placement panel on which a play item such as a trading card is placed, and, with the projector projecting images on the card placement panel in accordance with the game's progress, which provides stage effects and high realistic sensation. In particular, the invention provides a game machine, which is capable of projecting a variety of relevant images from the projector on the card placement panel in response to the player's operation of moving the play item on the panel in a sliding manner.

### BRIEF DESCRIPTION OF THE DRAWINGS

Fig. 1 is a longitudinal cross-sectional view illustrating the structure of a table-type projector/imaging device employed in the present invention;
Fig. 2 is an enlarged longitudinal cross-sectional view illustrating the structure of the transmission screen shown in Fig. 1;
Fig. 3A and Fig. 3B are enlarged longitudinal cross-sectional views given in explanation of examples of the concavo-convex structure on the surface of the light diffusion sheet member that forms part of the transmission screen shown in Fig. 2, fig. 3A showing one example of a trapezoidal concavo-convex profile and Fig. 3B showing one example of a spherical concavo-convex profile;
Fig. 4 is a perspective view illustrating the overall structure of the card game system showing one embodiment of the present invention;
Fig. 5 is a perspective view illustrating the terminal device operated by each player in the card game system of Fig. 4;
Fig. 6 is a control block diagram illustrating one example of the control of the card game system shown in Fig. 5;
Fig. 7 is a plan view of a card placement panel provided in the card game system shown in Fig. 5;
Fig. 8 is a diagram illustrating one example of a code pattern on the back side of a card which is used in the card game system;
Fig. 9 is a diagram illustrating one example of an image of the back side of the card of Fig. 8 taken by an infrared light camera;
Fig. 10 is a diagram illustrating starting positions of the bits in an ID data region and a data region recorded on the back side of the card of Fig. 8;
Fig. 11 is a diagram illustrating one example of a code pattern data arrangement on the back side of the card of Fig. 8;
Fig. 12 is a diagram for explaining the configuration of a software provided in the card game system shown in Fig. 5;
Fig. 13 is a flowchart for explaining the process steps of a game control program that controls the operation of the card game system shown in Fig. 5;
Fig. 14 is a flowchart for explaining the process steps of the game control program;
Fig. 15 is a diagram illustrating one example of a card placement screen when a card game is being played;
Fig. 16 is a diagram illustrating one example of a battle image projected on the card placement panel; and
Fig. 17 is a diagram illustrating one example of a screen asking whether or not to try a post-victory bonus game.

### BEST MODE FOR CARRYING OUT THE INVENTION

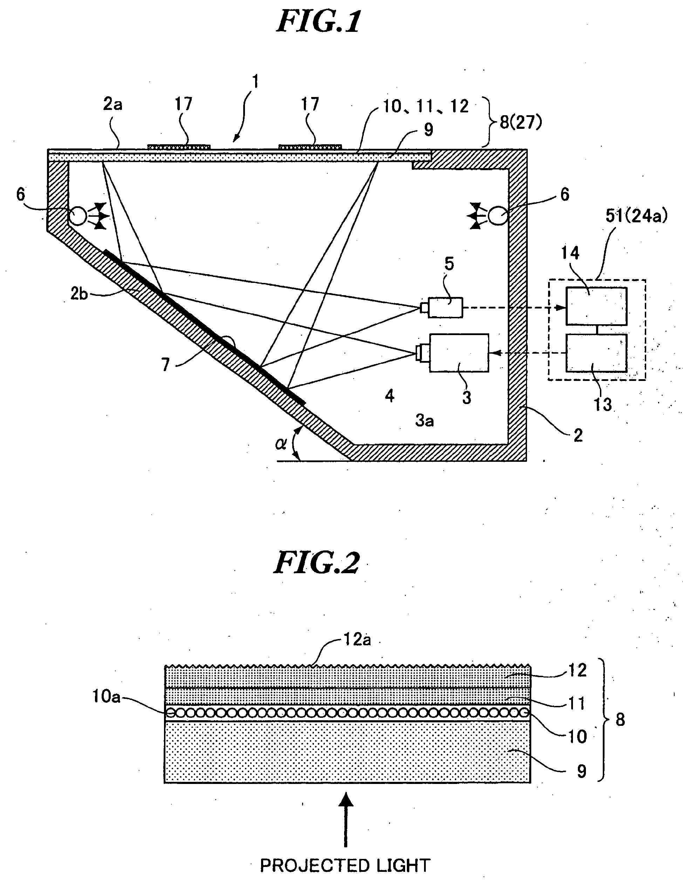

One embodiment of the present invention will be hereinafter described with reference to the drawings. Fig. 1 is a longitudinal cross-sectional view illustrating the structure of a table-type projector/imaging device 1 employed in the present invention. The table-type projector/imaging device 1 can be embodied, for example, as a table-type projector device used for presentation purposes, or, a play field or a card placement panel of a card game system, on which trading cards are placed and various images are projected for staging purposes.

The table-type projector/imaging device 1 shown in Fig. 1 is made up of a housing 2 having a table surface 2a, a projector 3 set inside the housing 2, an infrared light camera 5 serving as infrared light imaging means, an infrared light emission device 6 set in an upper part of the housing 2, a mirror 7 arranged on a lower slope 2b of the housing 2, anda transmission screen 8 arranged so as to form the table surface 2a on the upper opening of the housing 2. The projector 3 is provided with a filter 4 for cutting infrared light (infrared rays) in its lens unit 3a. The infrared light emission device 6 may be an LED or the like that emits infrared light.

The projector 3 is connected to a personal computer 13 in which color images and other image data are stored. The infrared light camera 5 is connected to an image analysis device 14 for analyzing captured image data. The infrared light camera 5 and the personal computer 13 can be connected to each other. The personal computer 13 and the image analysis device 14 can be combined as one controller 15, which may be a microcomputer or a personal computer.

The projector 3 is a liquid crystal projector or the like. The projector of this type requires a lamp for emitting light towards display elements such as a screen, since the display elements themselves do not emit light to show images. The light from the lamp is split into the three original colors R, G, and B using a prism or the like, and the split light beams are projected to respective display elements of R, G, and B and either transmitted or reflected, so that the image data is projected on the screen. The lamp used in the projector 3 emits visible light as well as invisible light such as infrared light and the like. Infrared light can cause adverse effects on the image capturing with the infrared light camera 5. The above-mentioned filter 4 provided in the lens unit 3a of the projector 3 is an infrared light cut filter for cutting infrared light contained in the light emitted from the projector 3.

The infrared light camera 5 is provided for imaging the information (such as a code pattern) recorded by printing or the like on the back side of the information recording medium 17 placed on the transmission screen 8 using infrared light emitted from the infrared light emission device 6. The transmission screen 8 that forms part of the image projection device is arranged horizontally or approximately horizontally on the housing 2. The infrared light camera 5, which constitutes the infrared light imaging means, may be infrared light detecting means such as an image sensor that detects infrared light. The housing 2 at least includes the projector 3 and infrared light detecting means such as the infrared light camera 5 inside.

Digital image data captured by the infrared light camera 5 is transferred to the image analysis device 14, which analyzes the imaged information such as a code pattern. The information recording medium 17 may be of any form, as long as it contains information such as a code pattern recorded on the face that is placed on the panel, and may be items (play items) used in various games such as such as trump cards, trading cards, chess, Japanese chess, and figures. The code pattern here means unique ID codes or the like assigned to each information recording medium 17. The image analysis device 14 performs image analysis of the received digital image data by software processing to recognize the ID code recorded on the back side of the information recording medium 17 and to determine the orientation or the like of the information recording medium 17 placed on the transmission screen 8.

As shown in Fig. 1, the mirror 7 is attached on the lower slope 2b of the housing 2 such that it is inclined at the same inclination angle α of the lower slope 2b. The projector 3 and the infrared light camera 5 are both arranged below the transmission screen 8 on the same side relative to the mirror 7, one positioned above the other. Thereby it is possible to emit light from the projector 3 and to image the back side of the information recording medium 17 by the infrared light camera 5 using the same reflection mirror 7. While Fig. 1 illustrates one example in which the infrared light emission device 6 is arranged in an upper part of the housing 2, it may be arranged in a lower part of the housing 2 depending on the inclination angle α of the mirror 7.

To project an image on the transmission screen 8, image data (including a moving image) stored in a memory device of the personal computer 13 is transferred to the projector 3, by the software processing of the personal computer 13 or the like. The projector 3 converts the image data into light and emits the light from the lens unit 3a. The light emitted from the projector 3 is reflected by the mirror 7 and projected as an image on the screen 8. Thus, the image projected on the transmission screen 8 can be seen from above the screen 8. Therefore, the screen 8 is of a transmission (rear side projection type) screen.

Fig. 2 is a longitudinal cross-sectional view illustrating the structure of the transmission screen 8 of Fig. 1. As shown in Fig. 2, the screen 8 is made up of a transparent glass plate base material 9, a light diffusion layer 10 formed on the upper face of the glass plate base material 9, a visible light absorption layer 11 formed on the upper face of the light diffusion layer 10 and made of carbon-free mixed inks of cyan (C), magenta (M), and yellow (Y), and a transparent visible light diffusion sheet member 12 arranged on the upper face of the visible light absorption layer 11. The transparent visible light diffusion sheet member 12 is made of transparent synthetic plastics such as polycarbonate or acrylic plastic, and a fine concavo-convex structure 12a is formed on its entire upper surface. According to the present invention, the transmission screen 8 includes at least the visible light absorption layer 11. The glass plate base material 9 need not necessarily be made of glass and can be a plate base material produced from polycarbonate or other synthetic plastics or reinforced plastics, as long as it has sufficient strength.

The transparent glass plate base material 9 that forms part of the transmission screen 8 shown in Fig. 2 may be a transparent reinforced glass or heat-resistant glass or the like. The glass plate base material 9 should have a thickness of at least 4 mm to 6 mm to secure sufficient strength to hold the load that may be applied by the hand or the like of the presenter during a presentation or the like.

The light diffusion layer 10 that forms part of the screen 8 is provided to diffuse the light emitted from the projector 3 and passed through the glass plate base material 9 to project (display) an image, and also to make the screen 8 surface brighter by diffusing light. By providing this light diffusion layer 10, sharp images can be projected on the screen 8 even when the room in which this table-type projector/imaging device 1 is set is bright.

The light diffusion layer 10 is made of a transparent plastic layer containing micro beads 10a with a mean particle diameter of 5 µm to 10 µm consisting of transparent glass or transparent organic substance. The thickness of the light diffusion layer 10 is preferably in the range of 100 µm to 500 µm. The light diffusion layer 10 may be formed on the glass plate base material 9 by applying an adhesive on the surface of the glass plate base material 9, dispersing the micro beads 10a densely and uniformly on the adhesive, and applying the adhesive again upon the dispersed micro beads 10a. The adhesive may be, for example, a vinyl acetate adhesive. Alternatively, the light diffusion layer 10 maybe formed by bonding a transparent plastic sheet containing the above micro beads 10a on the glass plate base material 9 using a transparent adhesive.

The visible light absorption layer 11 is provided to increase the contrast of the images projected on the screen 8. Screens usually include a visible light absorption layer that contains carbon black ink mixed in an appropriate ratio. However, carbon black ink has a nature of absorbing infrared light. According to the present invention, the information recorded by printing or the like on the back side of the information recording medium 17 placed on the transmission screen 8 is imaged using imaging means using infrared light emitted from the infrared light emission device 6.

Therefore, the characteristic feature of the visible light absorption layer 11 in the present invention is that it is a layer of carbon-free, light-transmitting inks (or pigments or dyestuff) of yellow (Y), cyan (C), and magenta (M) mixed together and applied to a thickness of 100 µm to 300 µm.

The visible light absorption layer 11 can be formed on the upper face of the light diffusion layer 10, for example, by applying several coats of carbon-free, light-transmitting inks of yellow (Y), cyan (C), and magenta (M) mixed together to a desired thickness on the surface of the light diffusion layer 10 by screen printing. The visible light absorption layer 11 is formed of a layer containing light-transmitting ink particles of yellow (Y), cyan (C), and magenta (M). Therefore, of the visible light rays contained in the light from the projector 3, the wavelengths of the original three colors ofyellow, blue, and red, and the invisible light rays, are transmitted through the visible light absorption layer 11, while the wavelengths near to the wavelengths of yellow, blue, and red are absorbed in the visible light absorption layer 11. The visible light absorption layer 11 applied with light-transmitting inks of yellow (Y), cyan (C), and magenta (M) mixed together appears as middle gray. Therefore, images are projected on the screen 8 with a high contrast ratio.

The transparent visible light diffusion sheet member 12 is made of a polycarbonate or acrylic plastic, which is a synthetic plastic having high transparency and shock resistance, and is provided with a fine concavo-convex structure 12a on the upper surface. The visible light diffusion sheet member 12 is a sheet of about 100 µm to 300 µm thickness. The fine concavo-convex structure 12a on the surface of the visible light diffusion sheet member 12 diffuses visible light in the external light such as lighting outside the table-type projector/imaging device 1. Therefore, images are projected clearly on the screen 8 without being affected by external light. The fine concavo-convex structure 12a also diffuses the light emitted from the projector 3, thereby providing the effect of making the surface of the screen 8 brighter.

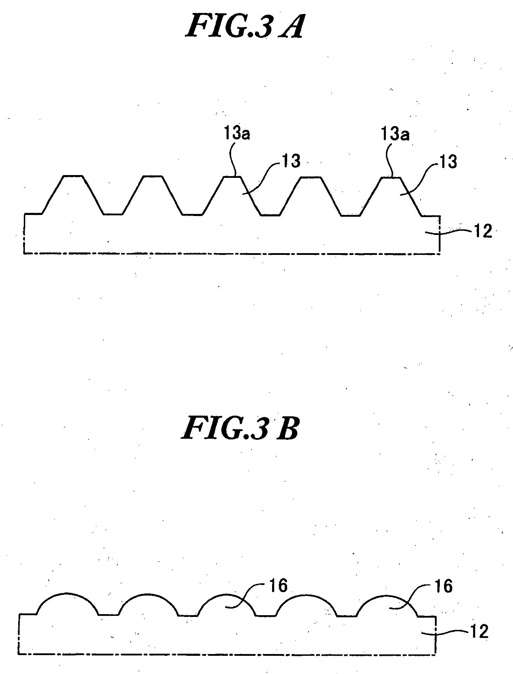

The fine concavo-convex structure 12a on the upper surface of the visible light diffusion sheet member 12 should preferably have a trapezoidal concavo-convex profile 13 with flat tops 13a in cross section as shown in Fig. 3A, or a spherical concavo-convex profile 16 as shown in Fig. 3B. The protrusions of these trapezoidal concavo-convex profile 13 or spherical concavo-convex profile 16 are formed to a height of about 1 µm to 10 µm. The trapezoidal or spherical concavo-convex profile 13 or 16 can be formed, for example, by plastic working (rolling), in which a heated sheet of polycarbonate or the like is passed through two rollers with appropriate pressure being applied, one roller having an inverted pattern of the trapezoidal or spherical concavo-convex structure 13 or 16 on the surface, and the other roller having a mirror surface.

Next, the information recorded on the back side of the information recording medium 17 will be described. This information here refers to a code pattern such as an ID code assigned to each information recording medium 17, and a pattern for determining the center position and orientation of the information recording medium 17 when it is placed on the screen 8. This information is either directly printed on the back side of the information recording medium 17, or, a sticker printed with the information is bonded on the back side of the medium 17, so that each information recording medium 17 has its recorded information.

The information mentioned above will be described in further detail. A code pattern or the like containing the information is printed in a predetermined region on the back side of the information recording medium 17, using an ink that contains a pigment or dyestuff that absorbs infrared light irradiated onto the medium, and an ink that contains a pigment or dyestuff that reflects infrared light. If the back side of the information recording medium 17 is made of a material that has the characteristic of reflecting infrared light, the print may be provided using only the ink that absorbs infrared light, and, conversely, if the back side of the information recording medium 17 is made of a material that has the characteristic of absorbing infrared light, the print may be provided using only the ink that reflects infrared light. This code pattern can also be printed with an ink that cannot be perceived by human eyes. When the back side of the information recording medium 17 is imaged by the infrared light camera 5 using the infrared light irradiated from the infrared light emission device 6, the parts that reflect infrared light will appear white, while the parts that absorb infrared light will appear black. An appropriate binary threshold is set to determine the border between black and white of the digital image data captured by the infrared light camera 5. Thus it is possible, by the program processing of the image analysis device 14, to decode the information recordedon the back side of the information recording medium 17 to recognize the code pattern (ID code) or to determine the position, orientation and the like of the medium 17 in the coordinate system of the screen 8.

Therefore, while the portion on the back side of the information recording medium 17 where the information is recorded is flat, the overall bottom plan view of the medium 17 may take any shape.

Next, the working of the table-type projector/imaging device 1 shown in Fig. 1 will be described.

The light emitted from the projector 3 is reflected by the mirror 7 and projected on the transmission screen 8. The infrared light irradiated from the infrared light emission device 6 reaches the back side of the information recording medium 17 placed on the upper face of the visible light diffusion sheet member 12, which forms part of the transmission screen 8. A code pattern is printed with ink as described above on the back side of the information recording medium 17. When the infrared light is irradiated on the region printed with an ink that reflects infrared light, the infrared light is reflected and reaches the mirror. This infrared light is reflected by the mirror 7 and reaches the lens of the infrared light camera 5. This way, the infrared light camera 5 is capable of real-time imaging of the region printed with the infrared light reflecting ink on the back side of the information recording medium 17, as well as of transferring the digital image data of the captured image to the image analysis device 14.

The mirror 7, as described above, has two functions: One is to reflect the light from the projector 3 toward the transmission screen 8 to project the image, and the other is to redirect the infrared light reflected from the back side of the information recording medium 17 inside the housing 2 so as to enable imaging by the infrared light camera 5. Therefore, since only one mirror 7 needs to be provided inside the housing 2 , it is possible to increase its reflectivity of the light from the projector 3 towards the transmission screen 8, as well as the focusing rate of the infrared light emitted from the infrared light emission device 6 and reflected by the back side of the information recording medium 17 towards the lens of the infrared light camera 5.

The transmission screen 8 provides the effects described in the following in relation to the light from the projector 3 and the infrared light from the infrared light emission device 6, whereby it is possible to project sharp, high-contrast images on the screen 8. Also, it enables the infrared light camera 5 to capture a sharp image of the code pattern printed on the back side of the information recording medium 17.

First, the light emitted from the projector 3 passes through the transparent glass plate base material 9 and reaches the light diffusion layer 10. The light diffusion layer 10 is made of a transparent plastic layer or a transparent plastic sheet containing arrays of transparent glass or organic micro beads 10a with a mean particle diameter of 5 to 10 µm. Therefore, when the light from the projector 3 enters the light diffusion layer 10, it is diffused as it passes through the arrays of micro beads 10a and projected as an image before reaching the visible light absorption layer 11. This diffusion of the light from the projector 3 by the transparent micro beads 10a also increases the brightness of the light diffusion layer 10. Accordingly, even when the table-type projector/imaging device 1 is installed in a bright room, it is possible to project a sharp image in the light diffusion layer 10 of the screen 8 from the projector 3.

The visible light absorption layer 11 is a layer formed of carbon-free mixed inks (or pigments or dyestuff) of yellow (Y), cyan (C), and magenta (M). While carbon has the characteristic of absorbing infrared light, the visible light absorption layer 11 does not contain carbon, so that the infrared light that has passed through the light diffusion layer 11 reaches the visible light diffusion sheet 12 without being absorbed in the visible light absorption layer 11. When infrared light is irradiated onto the region printed with a pigment that reflects infrared light on the back side of the information recording medium 17, the infrared light is reflected by the back side of the medium 17 and by the mirror 7 without being attenuated and reaches the infrared light camera 5. Thereby, the infrared light camera 5 can take a clear picture of the code pattern recorded by printing or the like on the back side of the information recording medium 17. When the back side of the information recording medium 17 is imaged by the infrared light camera 5, the region printed with an ink that reflects infrared light appears as white, while the region printed with an ink that absorbs infrared light appears as black.

The visible light absorption layer 11 is made of a layer of a mixture of carbon-free, light-transmitting inks of yellow (Y), cyan (C), and magenta (M). Mixed inks of yellow (Y), cyan (C), and magenta (M) appear as middle gray. When a dark image such as a black image is projected by the projector 3 onto the light diffusion layer 10, this middle gray visible light absorption layer 11 absorbs any perceivable light rays that have escaped through the light diffusion layer 10 in which the image is formed, thereby enabling display of high-contrast images with a rich black level.

Furthermore, the transparent visible light diffusion sheet member 12 is formed with a fine concavo-convex structure 12a on the upper surface. This fine concavo-convex structure 12a has the function of diffusing external light such as lighting of the room in which the table-type projector/imaging device 1 is installed, so that sharp images are formed in the light diffusion layer 10 without being affected by external light, and also, the images are formed with uniform brightness on the screen.

The transmission screen 8 can be made very thin, the total sum of thickness of the layers excluding the glass plate base material 9, i.e., the light diffusion layer 10, the visible light absorption layer 11, and the visible light diffusion sheet member 12, being 1 mm or less. This enables high-precision imaging and recognition of the information recorded in the form of a code pattern or the like on the back side of the information recording medium 17 placed on the transmission screen 8 using the infrared light camera 5.

Furthermore, the transmission screen 8 that forms part of the table-type projector/imaging device 1 can be used as the table of a game machine or the like, on which the game is played. For example, the transmission screen 8 can be used as a card placement panel of a card game system: An information recording medium (such as a trading card) 17, which is a play item, is placed on the screen 8, and moved around in a sliding manner on the visible light diffusion sheet member 12. When the table-type projector/imaging device 1 is used as a card placement panel of a card game machine, the fine concavo-convex structure 12a formed on the upper surface of the transparent visible light diffusion sheet member 12 can prevent friction or adhesion between the information recording medium 17 and the upper surface of the visible light diffusion sheet member 12. This enables very smooth sliding movement of the information recording medium 17 on the visible light diffusion sheet member 12 and smooth removal of the medium from the sheet member.

The image analysis device 14 recognizes the information such as a code pattern (ID code) recorded on the back side of the information recording medium 17 by software processing, when it receives one frame of image data from the infrared light camera 5. This decoding process can be carried out, for example, through the following steps 1 to 4:
1) Data of a standard image pattern, which is to be printed on the back side of the information recording medium 17, is registered in advance in the image analysis program of the image analysis device 14. This standard image pattern includes an image that indicates the center position (for example a circular image of a predetermined size), and an image that indicates the orientation of the information recording medium 17, represented in black and white.
2) First, black and white regions in the received one frame of image data are distinguished from each other. Asmentionedbefore, the region printed with an ink that reflects infrared light is identified as a white region when imaged by the infrared light camera 5, while other parts are identified as black. For this purpose, a threshold need be preset so as to determine the border between a white and a black pixel of the captured image data. The pixel including the threshold to be determined as a "white" pixel its determined as "white" based on that threshold, while other pixels are determined as "black". This process produces a black and white binary image from the one frame of image data captured by the infrared light camera 5, which is then stored in the memory device of the image analysis device 14.
3) Next, it is determined whether or not an information recording medium 17 is placed on the transmission screen 8. This can be done by determining whether or not the image that indicates the center position of the captured image is included in the one frame of the image data. If it is determined that the information recording medium 17 is placed on the transmission screen 8, the orientation of the medium 17 relative to the coordinate system of the screen on which the medium 17 is placed is determined, this being achieved by comparing the captured image with the image pattern that indicates the orientation of the medium, which has been registered in advance as a standard image pattern. Through this process, it is possible to detect the position (coordinates) and the orientation of the information recording medium 17 placed on the transmission screen 8. After determining the orientation of the information recording medium 17, the captured image data of the medium 17 is converted into image data, in which any inclination relative to the screen coordinate system has been modified to zero, this new image data being stored in the memory device. The screen coordinate system, which is two-dimensional, is preset with predetermined lengths in X- an Y-axis directions extending from the original point, in accordance with the rectangular area of the transmission screen 8 to be imaged by the infrared light camera 5.
4) Next, the information represented by the code pattern recorded on the information recording medium 17 is analyzed. The code pattern has been recorded within a predetermined region having a predetermined shape around the center position on the back side of the information recording medium 17. For example, the information can be decoded from the code pattern in the following manner:
   (4-1) First, with respect to the region where the code pattern has been recorded, it is determined whether each part of the code pattern is recorded as a "black and white" part or a white and black" part. The "black and white" part is determined as "1" and the "white and black" part is determined as "0". This way, numerical information represented by the binary number system using 0 and 1 can be decoded from the entire region where the code pattern has been recorded.
   (4-2) The binary scale information decoded in the step 4-1 described above is then converted into the decimal number system or into alphabets and numbers.

Through the steps 1 to 4 described above, the information represented by the code pattern recorded on the back side of the information recording medium 17, for example the unique ID code assigned to each medium 17, can be read out and decoded (analyzed).

The table-type projector device 1 can be embodied as a table-type projector device used for presentation purposes or as a card placement panel of the card game machine as described above. The following is one example of how it can be used as a table-type projector device used for presentation purposes:

When giving a presentation, various images need to be presented. When answering questions or the like, the presenter may want to project another image data on the transmission screen 8, the data being provided with a different file name from that of the image that has been presented, and to do so the presenter need to operate the personal computer 13. In such occasions, the presenter places an information recording medium 17 on the transmission screen 8. On the back side of the information recording medium 17 has been printed a number pattern for identifying a particular name of the file in which the image data is stored. The number pattern is imaged by the infrared light camera 5, and the software installed in the image analysis device 14 decodes the number from the captured image data. This way, the image analysis device 14 can control the personal computer 13 to project the image data specified by the information recording medium 17 automatically.

Next, the game machine of the present invention, in which the table-type projector/imaging device 1 described above is applied, will be described.

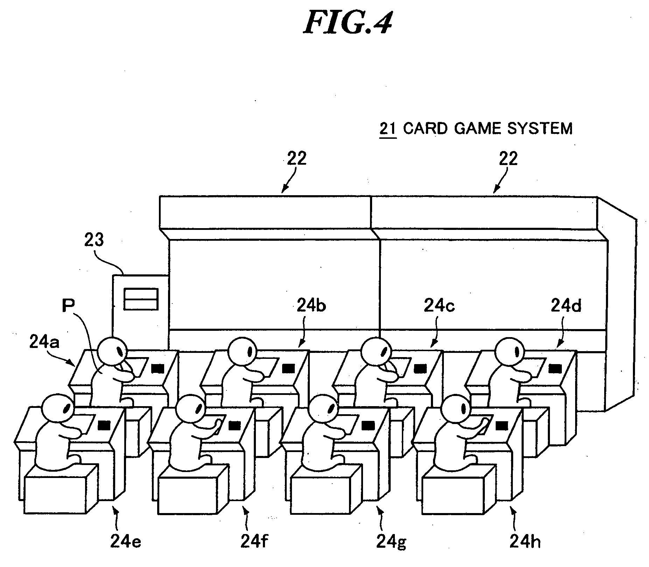

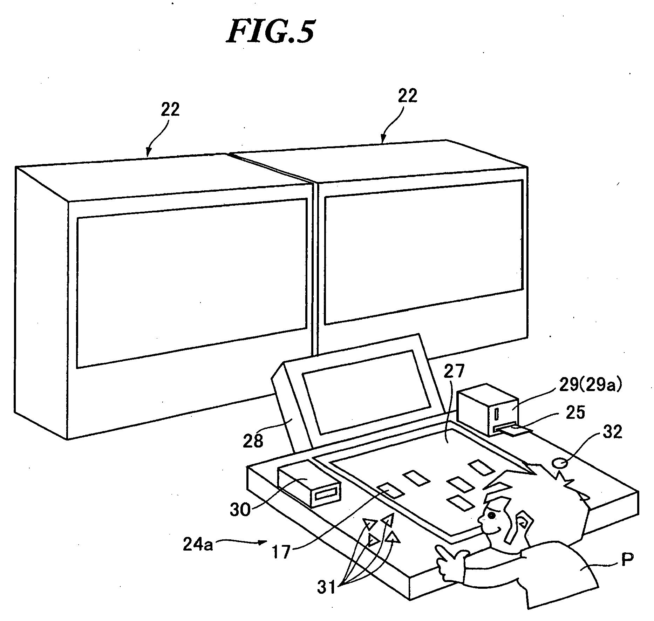

Fig. 4 is a perspective view illustrating the overall structure of the game machine of the present invention embodied as a card game system 21, and Fig. 5 is a perspective view illustrating the terminal device operated by each player in this card game system. The card game system 21 described below is applied to a battle game set in a war-torn era, but the card game system can also be applied to other card games including football simulation games.

As shown in Fig. 4 and Fig. 5, the card game system 21 is made up of one or two large panel display(s) 22, a main controller 23 for the display control of the large panel display 22, and a plurality of terminal devices 24a to 24h which are connected in communication with the main controller 23. Each of the terminal devices 24a to 24h constitutes the game machine of the present invention. Each of the terminal devices 24a to 24h constitutes the controller 15 shown in Fig. 1.

The large panel display 22 is used to display a screen showing the current territorial alignments which change by the moment, an introduction of players who have successfully dominated the whole country as "previous emperors" , and a ranking of the emperors, etc.

A player P who participates in a game for the first time purchases a starter kit first, which is necessary for playing the game, and sits at one of the terminal devices 24a to 24h. The starter kit includes an IC card 25 used as a recording medium for recording battle results and the like, and a plurality of cards 17 printed with illustrations of warlords or the like who leadrespective troops. These cards 17 serve as play items for performing the card game, i.e., trading cards, and the play item will be referred to as a "card 17" in the following description. The card 17 represents the information recording medium 17 described in conjunction with the structure shown in Fig. 1.

On the IC card 25 is recorded player data, at least including the types of the cards 17 which the player owns, the qualities of the warlords or the like corresponding to ID codes recorded, for example, printed on the back side of the cards 17 such as "well-armed, good at charging", "intelligent, strategic", etc., previous battle results, and the name or nickname of the player. Thus, the card game system 21 can obtain data necessary for the game by reading out the information recorded on the IC card 25, and verify that the player P is qualified to take part in the game.

The cards 17 have illustrations or the like of various different warlords printed thereon. On the back side of the cards 17 are recorded code patterns which form ID codes for identifying the warlords printed on the front side.

The terminal devices 24a to 24h have the same structure, and the description will be made with reference to the terminal device 24a shown in Fig. 5. The terminal device 24a includes a cardplacement panel 27 for placing cards 17 the player P owns thereon, a monitor 28 for displaying screens of a battle or the like, an IC card read/write device 29 in which the IC card 25 is inserted, a coin insertion device 29a, and a card issuing device 30 for giving out (issuing) new cards 17 to the player P per each game played. The card placement panel 27 has the same structure as the above-described transmission screen 8 of the table-type projector/imaging device 1 shown in Fig. 1.

Note that each one of these terminal devices 24a to 24h constitutes the game machine of the present invention. Players who operate these terminal devices 24a to 24h can play a game with each other as competing opponents. Also, the player can play a game with the terminal device 24a or the like which he/she is operating as the opponent. The coin insertion device 29a includes a coin slot and a sensor for identifying the inserted coins, and constitutes game fee collecting means for collecting the game fee when the player P starts a game. The coin insertion device 29a in Fig. 5 is united with the IC card read/write device 29, but they may be separated.

On the left side of the cardplacement panel 27, select buttons 31 for moving the cursor when inputting a name or selecting an item from a menu are provided. On the right side of the card placement panel 27, various button switches such as an action button 32 which is pressed for executing a "tactics", a "charge", or a "one-on-one fight", a start-up button, and the like are provided.

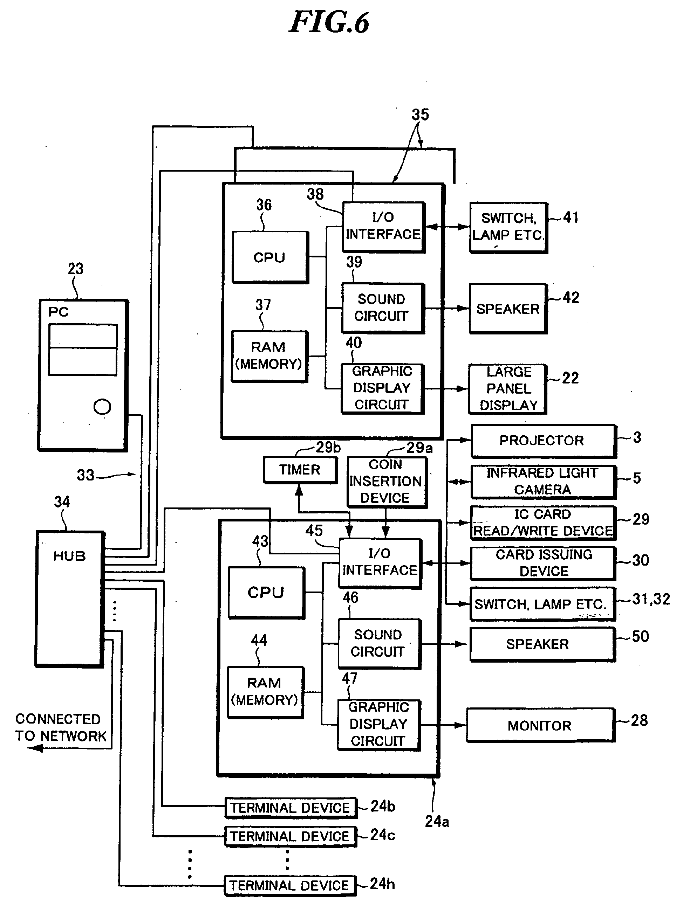

A description regarding the control mechanism of the card game system 21 will now be given. Fig. 6 is a block diagram for explaining one example of the control system of the card game system 21. The main controller 23 is connected through a hub 34 of a LAN (Local Area Network) 33 to a large panel controller 35 for the display control of the large panel display 22, to the terminal devices 24a to 24h, and to an external communication network (not shown).

The large panel controller 35 is made up of a control board or the like which includes a CPU 36, a RAM 37 which is a storage device (memory), an I/O interface 38, a sound circuit 39, and a graphic display circuit 40. The RAM 37 stores data of various images displayed on the large panel display 22, and an image output control program which selects these image data, determines a priority sequence, and displays the images in that sequence.

The I/O interface 38 is connected to the main controller 23 through the hub 34, and to switches 41 or the like for operating the large panel display 22. The sound circuit 39 is connected to a sound amplifier (speaker) 42 which outputs sound in accordance with various images displayed on the large panel display 22. The RAM 37 also stores sound data and a sound output control program for outputting the sound data to the speaker 42. The graphic display circuit 40 displays an image selected by a control signal from the CPU 36 on the large panel display 22.

Each of the terminal devices 24a to 24h is made up of a control board or the like which includes a CPU 43, a RAM (memory) 44, an I/O interface 45, a sound circuit 46, and a graphic display circuit 47. The RAM 44 stores (records) data of various images displayed on the monitor 28, image data to be displayed on the card placement panel 27 constituting the transmission screen, an image output control program which controls the display of these image data, and a game control program which controls the progress of the game when a game is played with the card game system 21. The RAM 44 further stores battle data or the like which is used when the player P plays a game with the terminal device 24a or the like as the opponent. Recorded as the battle data are ID codes of various warlords who will be the enemies of the player P and their qualifies.

The I/O interface 45 is connected to the main controller 23, as well as to the IC card read/write device 29, a coin sensor (not shown) of the coin insertion device 29a, a timer 29b, the card issuing device 30, the select buttons 31, the action button 32, and the switches or the like for operating the monitor 28. The I/O interface 45 is also connected to an infrared light camera 5 for reading out the code patterns printed on the back side of a card 17, a projector 3 for projecting an image onto the card placement panel 27, and the like. The timer 29b is used as means for counting time which has passed, but a software timer which counts time with a program may also be employed. The infrared light imaging means may be the infrared light camera 5, or, an infrared light detecting means such as an image sensor that detects infrared light, as mentioned before.

The sound circuit 46 is connected to a soundamplifier (speaker) 50 which outputs sound in accordance with various images shown on the monitor 28. The RAM 44 also stores sound data and a sound output control program for outputting the sound data to the speaker 50. The graphic display circuit 47 displays an image selected by a control signal from the CPU 43 on the monitor 28.

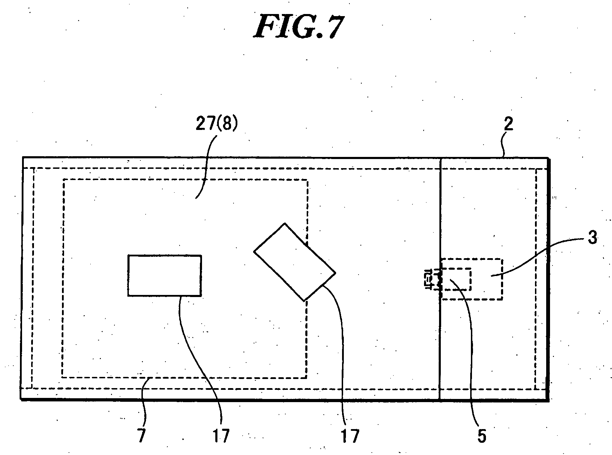

Fig. 7 is a plan view of the card placement panel 27 shown from above; the panel is rectangular. The longitudinal cross section of the housing 2 in which the card placement panel 27 is mounted is the same as that of the table-type projector/imaging device 1 described in the foregoing with reference to Fig. 1. Also, a cross section of the card placement panel 27 looks the same as that of the transmission screen 8 shown in Fig. 2.

That is, the card placement panel 27 is structured the same as the transmission screen 8, which is attached such as to close the upper face opening of the housing 2 as shown in Fig. 1. As described before, the card placement panel 27 is made up of a transparent glass plate base material 9, a light diffusion layer 10 formed on the upper face of the glass plate base material 9, a visible light absorption layer 11 formed on the upper face of the light diffusion layer 10 and made of carbon-free mixed inks of yellow (Y), cyan (C), and magenta (M), and a transparent visible light diffusion sheet member 12 arranged on the upper face of the visible light absorption layer 11. A fine concavo-convex structure 12a is formed on the upper surface of the visible light diffusion sheet member 12.

When playing a game, the player P places cards 17 or play items on the upper face of the visible light diffusion sheet member 12 of the card placement panel 27. When the player P competes against another player who is operating another terminal device 24b, they place their cards 17 on the respective visible light diffusion sheet members 12 of their terminal devices, respectively.

As with the structure shown in Fig. 1, inside the housing 2 are provided an infrared light emission device 6 for emitting infrared light (invisible light) toward the back side of the card 17 placed on the card placement panel 27; a mirror 7 for reflecting the infrared light emitted from the infrared light emission device 6 and reflected on the back side of the card 17 towards the lens of the infrared light camera 5; and a projector 3 for projecting an image on the card placement panel 27, which forms the transmission screen 8. Light emitted from the projector 3 is reflected by the mirror 7 and projected as an image on the card placement panel 27 or the transmission screen 8. The player P can see this projected image from above the card placement panel 27.

The image projected on the card placement panel 27 may be, for example, an image of a battle scene that changes along with a movement of the card 17 when the player P moves around the card 17 in a sliding manner on the card placement panel 27, so as to enhance the stage effects of the game, this being achieved by the game control program P stored in the RAM 44.

Because of the lower slope 2b of the housing 2, the player P, when seated, can place his/her legs in the space below the slope 2b. This allows the player P to stretch his/her arm to a farthest position on the card placement panel 27 when laying the cards 17 on the panel 27, enabling him/her to place the card 17 anywhere on the card placement panel 27. From inside the tightly closed housing 2 is projected infrared light (invisible light) from the infrared light emission device 6 onto the card placement panel 27, and therefore the card placement panel 27 cannot be seen through from above into the housing 2.

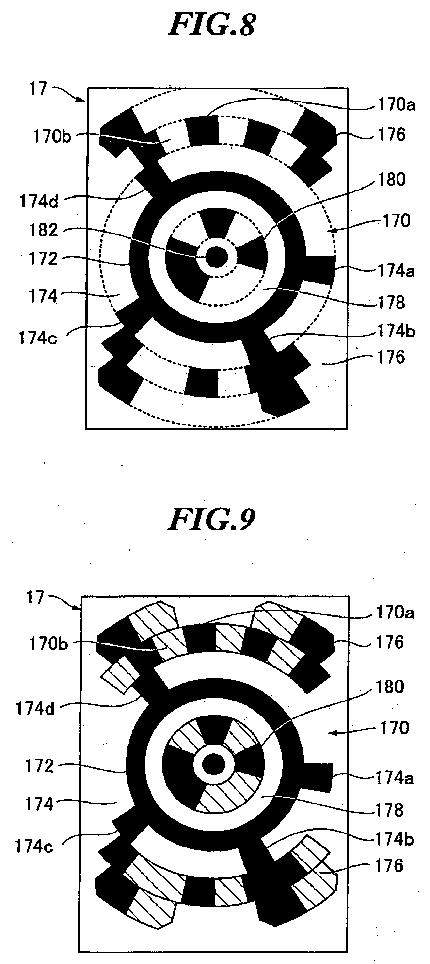

Fig. 8 shows one example of a code pattern recorded by being printed on the back side of the card 17. A code pattern 170, formed from various patterns with different radii, is printed on the back side of the card 17. The code pattern 170 includes a card position detection circle 172; an angle position detection pattern region 174 formed around the card position detection circle 172; an ID data region 176 formed around the angle position detection pattern region 174; an annular white region 178 formedinside the cardposition detection circle 172; a data region 180 formed inside the annular white region 178; and a center point 182 formed inside the data region 180. The code pattern 170 is identified with the use of the infrared light camera 5 by the difference in intensity between a black portion 170a and a white portion 170b.

The code pattern 170 is printed using an ink that cannot be identified with visible light, so that the player cannot directly see the code pattern. This prevents the player or other persons from tampering with the code pattern 170 to change the pattern or from fabricating a card with a forged code pattern.

The card position detection circle 172, the angle position detection pattern region 174, the ID data region 176, the annular white region 178, and the data region 180 of the code pattern 170 are concentric circles around the center point 182, and the ID data region 176 is formed in an arc-shape, because its radius is larger than the short side of the card 6. That is, the ID data regions 176 is the outermost circular pattern and since this circle has a larger radius than the short side of the rectangular card, it is partly provided as an arc, so as to use the entire surface of the card efficiently.

Fig. 9 shows one example of an image of the back side of the card 17 taken by the infrared light camera 5. When the code pattern 170 is imaged by the infrared light camera 5 as shown in Fig. 9, a black-white portion is identified as "1" and a white-black portion as "0".

The white portions of the ID data region 176 and the data region 180 in Fig. 9 are provided with hatching; they are not blanks but indicate some information as combinations with black portions. That is, a region indicated with a combination of a black portion and a white portion as mentioned above is identified as a 1-bit signal.

For example, the size of one half bit (one black portion or one white portion) may be shown with six dots in a region on the screen that displays image data taken by the infrared light camera 5.

The code pattern 170 and the center point 182 of the card 17 are detected based on the difference in brightness between the inner side and the outer side of the card position detection circle 172. Annular white regions are therefore formed inside and outside of the card position detection circle 172 so as to make the difference in brightness clear between the inner and outer circumferences of the circle 172. Being a circle, the card position detection circle 172 enables detection of the card position detection circle 172 irrespective of the orientation (angle position) of the card 17. This enables determination (detection) of the coordinates of, for example, the center position of the rectangular card 17 relative to the two-dimensional coordinate system preset on the card placement panel 27.

The angle position of the code pattern 170 (orientation of the card 17) is determined by detecting circumferential distances between protrusions 174a to 174d in the angle position detection pattern region 174 which extend radially outwards from the outer circumference of the card position detection circle 172. Therefore, the protrusions 174a to 174d are not equally but differently distanced around the circle, so that the angle position of the card 17, or its orientation relative to the two-dimensional coordinate system preset on the card placement panel 27, can be determined by detecting the different distances.

The value of each bit is determined from the difference in brightness between two adjacent half bit regions. For example, if the regions are recorded as "black-white", they are determined as "1", and if the regions are recorded as "white-black", they are determined as "0" . When determining the brightness of each region, the brightness in the center of each region is used and not the brightness at the edge of the interface between the adjacent regions, so as to minimize the effect of defocusing or positional/angular misalignment.

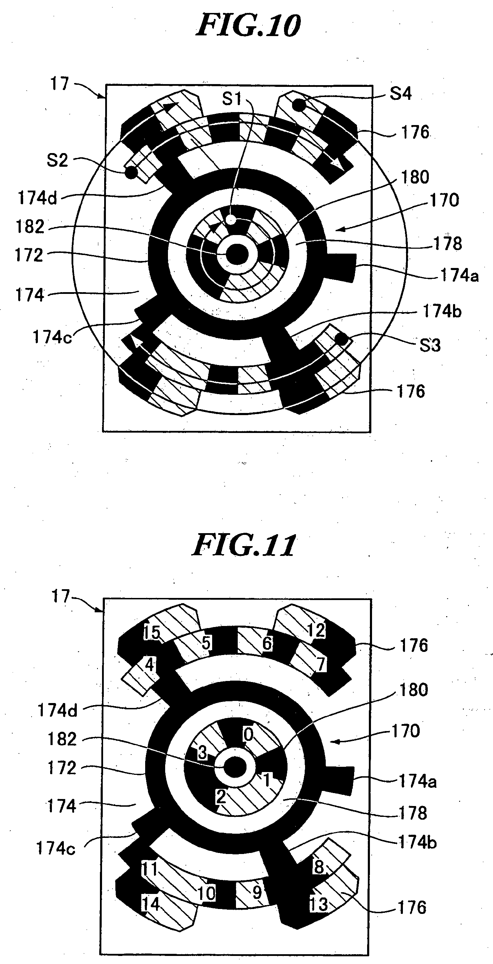

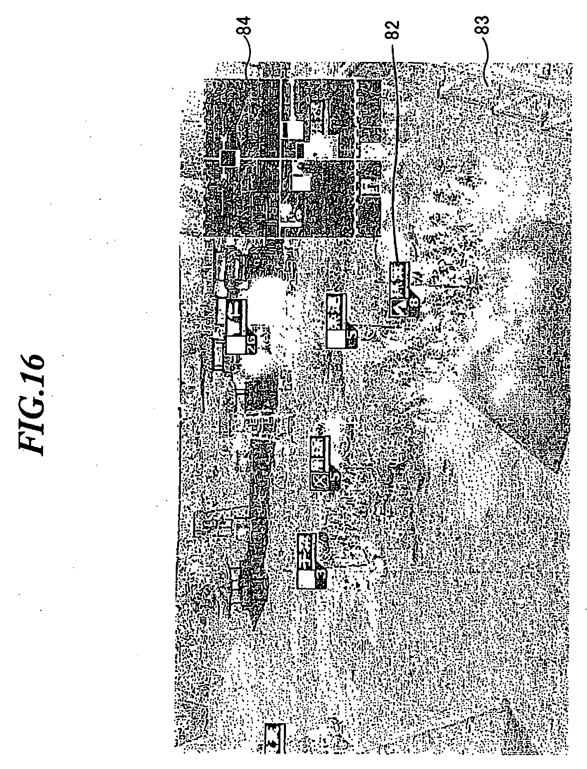

As shown in Fig. 10, each card 6 has a different bit start position S1 to S4 in the ID data region 176 and the data region 180. As shown in Fig. 11, 16-bit information made up of patterned data 0 to 15 is available from the ID data region 176 and the data region 180. Each patterned data 0 to 15 includes a black portion and a white portion as described above, and each black-and-white portion has a relatively large area so that it is easily recognizable from the image data taken by the infrared light camera 5 so as to prevent a data read errors.

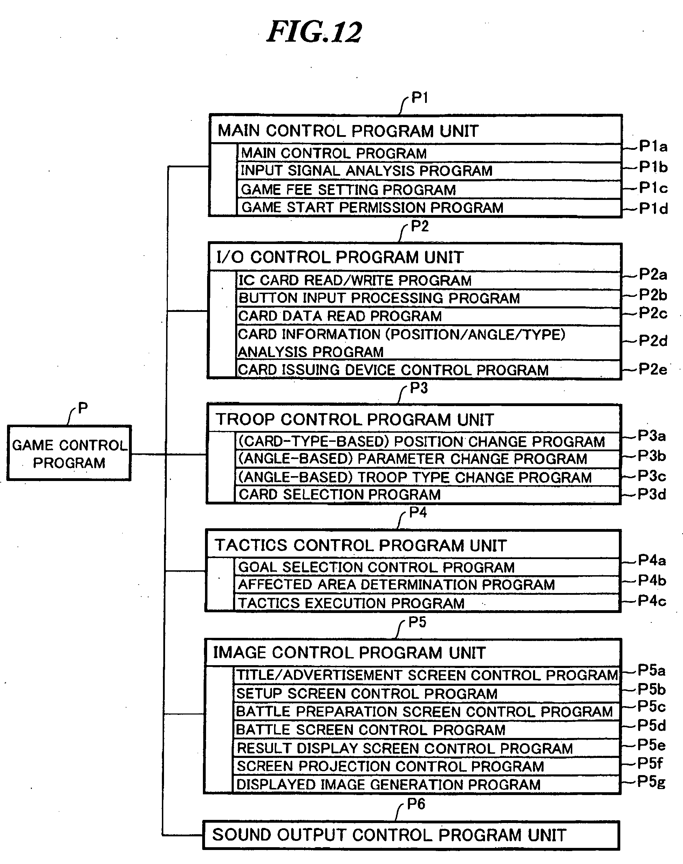

Next, the configuration of the software stored in the RAM 44 of each terminal device 24a to 24h for controlling the operation of the card game system 21 will be described. Fig. 12 shows one example of the configuration of the program P which controls the operation of the card game system 21.

As shown in Fig. 12, the game control program P which controls the operation of the card game system 21 is made up of a main control program unit P1; an I/O control program unit P2; a troop control program unit P3; a tactics control program unit P4; an image control program unit P5; and a sound output control program unit P6. This game control program P constitutes the game control means of the present invention.

The main control program unit P1 is configured with a program which controls the overall operation of the card game system 21, and sub-programs necessary for this overall control. The main control program unit P1 includes several sub-programs such as a main control program P1a, an input signal analysis program P1b, a game fee setting program P1c, and a game start permission program P1d.

The main control program P1a is executed after the power of the card game system 21 is turned on and controls the whole process of a game. The main control program P1a also includes an initialization program which initializes memory regions of the RAM 44, which are provided for storing variables used in the program, and which displays a start-up screen on the monitor 28 when the power of the device 1 is turned on. The main control program P1a also includes a communication control program for data communication with other terminal devices 24b or the like when the player P competes with another player who is operating one of the other terminal devices 24b or the like.

The input signal analysis program P1b is a program for analyzing a signal (such as an interrupt signal) inputted from the IC card read/write device 29, coin insertion device 29a, infrared light camera 5, select buttons 31, action button 32 and others, and for allocating a sub-program to necessary processing.

The game fee setting program P1c is a program for setting a fee per one game when a player P plays a game. According to this game fee setting program P1c, when the player P wins one game, he/she is given the right to try another game successively (post-victory bonus game), a choice being given to the player whether he/she wishes to try or not. If the player P chooses to try the post-victory bonus game, the game fee is set lower than a normal fee. In addition to this, if the player wins the first post-victory bonus game, he/she can further try a second post-victory bonus game. The game fee for the second post-victory bonus game is also set lower.

The game start permission program P1d is a program which counts and stores the amount (number) of coins inserted in the coin insertion device 29a by the player P. That is, the program recognizes the number of inserted coins as the number of stored coins which can be allocated to the game fee, and determines whether or not the amount of stored coins covers the game fee (credit) of one game. The program then gives permission to start the game when it has determined that the amount of stored coins (number of inserted coins) covers the fee for the game. If the amount of coins fails to cover the fee, the program displays a number of coins which need to be inserted on the monitor 28.

Although not shown in Fig. 12, the main control program unit P1 also includes a match-up program which is a control program for allowing the player P to play a game with the terminal device which he/she is operating as his/her opponent.

The I/O control program unit P2 is made up of a program which executes necessary processing based on an input signal from the above-mentioned various button switches, and an input device or a sensor of the IC card read/write device 29 which are connected to the I/O interface 45; and a program which controls output to the IC card read/write device 29, the card issuing device 30 and others. As shown in Fig. 12, the I/O control program unit P2 includes several sub-programs such as an IC card read/write program P2a, a button input processing program P2b, a card data read program P2c, a card information (position/angle/type) analysis program P2d, and a card issuing device control program P2e.

The IC card read/write program P2a is a program which controls the operation of the IC card read/write device 29, such as reading the data recorded on an IC card 25 owned by a player P when he plays a game and storing such data in the RAM 44, and writing data on game results or battle results on the IC card 25. The button input processing program P2b is a program which executes processing in accordance with an input signal from the select buttons 31, action button 32, and others.

When the player P places the card 17 on the card placement panel 27 to start a game, the card data read program P2c converts the image data taken by the infrared light camera 5 into a black and white binary image, extracts image data regarding the code pattern 170 printed on the back side of the card 17, and stores the extracted data in the RAM 44.

The card information (position/angle/type) analysis program P2d is means for detecting the position, orientation, and the like of a card 17 relative to a two-dimensional coordinate system preset on the card placement panel (transmission screen) 27 by analyzing the image data of the code pattern 170 that has been extracted as described above; the program stores the detected coordinates or the like in the RAM 44. The two-dimensional coordinate system preset on the card placement panel 27 is positioned inside the rectangular region of the card placement panel 27 that is imaged by the infrared light camera 5, its original point being appropriately positioned. Which pixel (memory address) of the one frame of pixels stored in the RAM 44 corresponds to the original point on the card placement panel 27 has been determined beforehand, and the memory address, which indicates the original point of the one frame of image data, is stored in the program. This enables detection of the coordinates and orientation of the card 17 placed on the card placement panel 27 relative to the two-dimensional coordinate system on the panel based on the image data taken by the infrared light camera 5.

According to the present invention, the card information (position/angle/type) analysis program P2d is activated at predetermined intervals of, for example, 16 msec, so as to detect a movement and the amount of movement of the card 17 when the player P moves around the card 17.

The card issuing device control program P2e is a program which controls issuance of a new card 17 to a player P, based on the control of the main control program P1, from the card issuing device 30.

The troop control program unit P3 and the tactics control program unit P4 are programs that control the operation in battle scenes of the game based on the amount of movement, orientation and the like of the card 17 that is moved by the player P in a sliding manner on the card placement panel 27 to perform an attack or the like. The programs also activate the projector 3 to project battle images on the card placement panel 27 or the transmission screen.

The troop control program unit P3 is a program that controls the troop represented by a card 17 based on the card information such as an ID code or the like recorded on the card 17. The troop control program unit P3 includes various sub-programs such as a (card-type-based) position change program P3a that changes the position of the troop by the type of the card in accordance with the position of the card 17 ; an (angle-based) parameter change program P3b that changes the parameters (such as attack force, firing range, and defense force) of the troop in accordance with the angle (orientation) of the card 17; an (angle-based) troop type change program P3c that changes the type of the troop (such as an army of spear carriers or archery squads) in accordance with the angle (portrait-oriented or landscape-oriented, etc.) of the card 17; and a card selection program P3d that determines that a troop represented by a card 17 has been selected based on a change in position of the card 17 when the player P moves the card 17 on the card placement panel 27 in a slidingmanner, the change being detected by the analysis program P2d as described above.

The tactics control program unit P4 is a program which controls tactics (such as firing tactics to give damage to the opponent) in accordance with the card information recorded on the card 17 and the player's operation of the action button 32. The tactics control program unit P4 includes several sub-programs such as a goal selection control program P4a which displays goals of the tactics in accordance with the angle of the card 17 for the player P to select, when the troop which corresponds to the card 17 selected by the card selection program P3d mentioned above is in a condition to use the tactics (when the troop morale is more than a predetermined level) ; an affected area determination program P4b which determines the area affected by the tactics; and a tactics execution program P4c which executes the tactics and reproduces the damage inflicted upon the opponent. The tactics execution program P4c also includes a program which constitutes game outcome determination means for determining the outcome of the game.

The image control program unit P5 is configured with programs for outputting various images for stage effects as the game progresses on the monitor 28 and on the card placement panel 27 or the transmission screen 8, based on the control of various programs such as the main control program unit P1, the troop control program unit P4, and the tactics control program unit P5. The image control program unit P5 includes various sub-programs such as a title/advertisement screen control program P5a, a setup screen control program P5b, a battle preparation screen control program P5c, a battle screen control program P5d, a result display screen control program P5e; a screen projection control program P5f, and a displayed image generation program P5g.

The title/advertisement screen control program P5a is a program that displays the title of the game and advertisements and the like on the monitor 28 when a game is started by the control of the main control program P1a. The setup screen control program P5b is a program that displays setup screens on the monitor 28, such as a mode selection screen, a card registration screen, a strategy selection screen, a continent display screen for matching up opponents, a battle result screen, a screen showing ranks in accordance with the battle results, and a conquest screen.

The battle preparation screen control program P5c is a program that displays battle preparation screens on the monitor 28, such as an opponent introduction screen and a card placement screen. The battle screen control program P5d is a program that displays an overall image of the battlefield on the monitor 28, the result display screen control program P5e is a program that displays a screen that shows experience points obtained in accordance with the battle results, a battle result review screen, and a card issuance screen for notifying (reporting) the player P of the issuance of a new card on the monitor 28.

The screen projection control program P5f is a program that controls the projector 3 to project image data stored in the RAM 44 on the card placement panel 27 or the transmission screen; the program constitutes the screen projection control means. To start the battle, the player P places a card 17 on the card placement panel 27, and moves it in a sliding manner towards the opponent side to attack the enemy. The image projected on the card placement panel 27 at this time may be, for example, an image of battle that changes in accordance with the movement of the card 17. That is, the position information of the card 17 and the like is incorporated into the virtual three-dimensional game space, and the image coordinates are converted into the two-dimensional system and displayed as an image of battle on the card placement panel 27, this being achieved by the control by the main control program P1a. This coordinate conversion process would be necessary if the image of battle that changes with the movement of the card 17 is to be displayed on the monitor 28 as well.

Preferably, a variety of images of battle scenes should be displayed on the card placement panel 27 instantly each time the player P moves one of the cards 17 in a sliding manner on the panel 27 to attack the enemy, particularly because each card (troop) 17 has a different attack method. Thus, while the monitor 28 displays a screen with an overall view of the battle and a screen providing the player P with advice on how to proceed the game, the card placement panel 27 displays images of battle scenes that change by the moment with the movement of the cards 17, thereby increasing the stage effects of the game progress.

The displayed image generation program P5g incorporates position information of the cards 17 or the like that are represented by two-dimensional coordinates of the card placement panel 27 into the above-mentioned virtual three-dimensional game space, and generates image data by converting image coordinates into the position information in the two-dimensional coordinate system. This enables display of battle scenes that change by the moment in accordance with the amount of movement of the cards 17 on the card placement panel 27, with the card information (position/angle/type) analysis program P2d determining the amount of movement and orientation of the cards 17 that are moved in a sliding manner on the card placement panel 27. For example, the program can display images of battle or the like around the card 17 wherever it is, or display an image of an object moving towards the card 17 that is placed on the panel. This processing by the displayed image generation program P5g constitutes means for generating a displayed image.

The process of incorporating position information of the cards 17 placed on the card placement panel 27 into the virtual three-dimensional game space, and of converting the game images in this three-dimensional space into the two-dimensional coordinate system, can be performed in the following manner:
1) First, the position and orientation of the card 17 placed on the card placement panel 27 are determined as coordinates in the two-dimensional coordinate system (actual space) preset on the card placement panel 27 by the card information (position/angle/type) analysis program P2d as mentioned above, based on the image data captured by the infrared light camera 5.
2) Next, the two-dimensional coordinate system, which is set in an actual space, is converted into the game space coordinate system, which is set in a virtual three-dimensional space. For this purpose, the lengths in X-, Y-, and Z-axis directions of the game space coordinate system, and the position of the original point of the card placement panel coordinate system in the game space coordinate system, are predetermined. This conversion process of the two-dimensional coordinate system into the coordinate system of the virtual three-dimensional space can be achieved using an affine conversion method or the like.
3) Next, the coordinates of the virtual three-dimensional space are converted using a perspective projection conversion method so that images of battle with the position information of the cards 17 incorporated therein can be projected on the card placement panel 27.

The sound output control program unit P6 is a program for outputting sound from the speaker 30 based on the control by the main control program unit P1, the troop control program unit P3, and the tactics control program unit P4.

These programs noted above can be developed using a program developing language such as the C language. Source programs developed using the C language or the like are translated into object programs (of the machine language) which can be executed in the CPU 43, and these programs are stored in a CD-ROM, a DVD-ROM, or an external memory device such as a hard disk device of the terminal device 24a. Various image data and sound data are also stored in a recording medium which can be read by a computer. When the power of the terminal device 24a is turned on, and a CD-ROM or a DVD-ROM, for example, on which the above-noted programs are stored, is set in a reading device of the terminal device 24a, these programs and image/sound data are read into the RAM 44, whereby the card game can be executed.

Next, the game method and the program processing of one embodiment of the card game system 21 of the present invention will be described. When a player P plays a game with the card game system 21 for the first time, he/she needs to purchase a starter kit from a vending machine or the like in a video arcade or the like. A starter kit includes a plurality of cards 17 printed with illustrations of warlords or the like who lead respective combat troops used in the game, and one IC card 25 having a built-in IC chip. On the IC card 25 is preliminarily stored the characteristics data of combat troops represented by the cards 17 as mentioned above, and battle results of each game are also stored in the IC card 25.

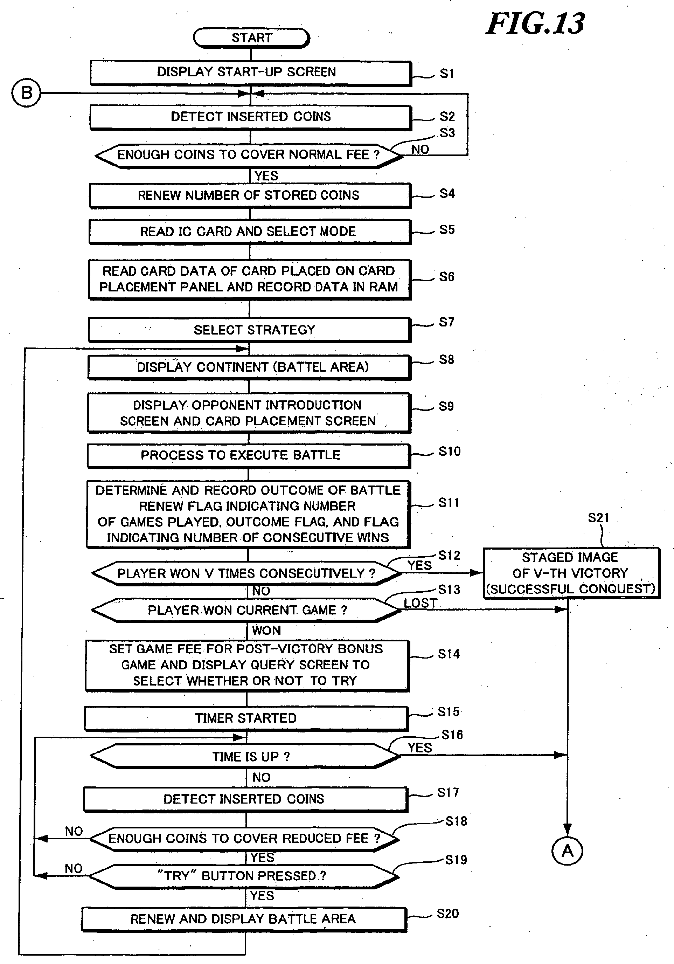

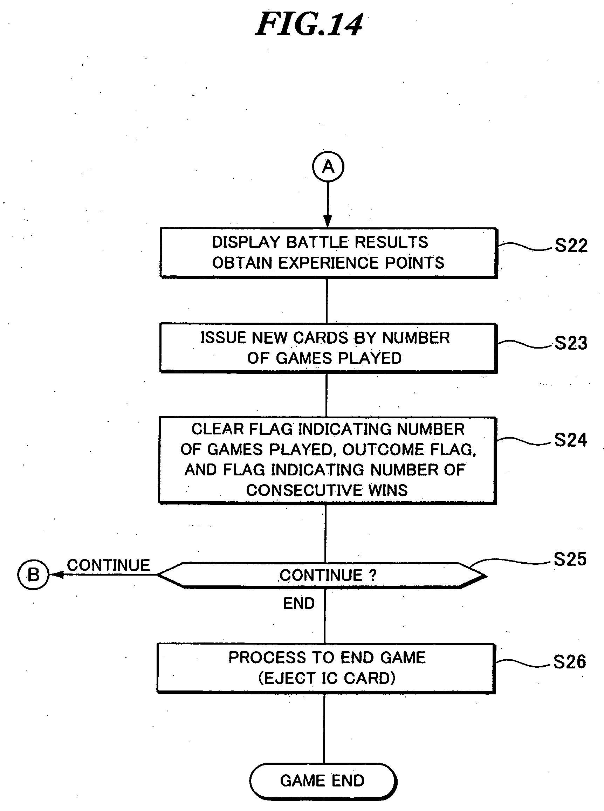

First, when the terminal device 24a is turned on, the various programs and image/sound data shown in Fig. 12 and stored in a CD-ROM or the like from the external memory device of the card game system 21 are read into the RAM 24. Then, the main control program P1a is started and initializes the memory region in the RAM 44 where variables are stored. The process steps of the game control program will be described below based on the flowcharts shown in Figs. 13 and 14.

### (Step S1)

In step S1, the main control program P1a activates the title/advertisement screen control program P5a so as to display the title or the like of the card game on the monitor 28. The card game system 21 then waits for the player P to insert coins to play a game.

In the process step S1, the title or the like of the card game is displayed on the monitor 28. In addition, the screen projection control program P5f may be activated by the main control program P1a to project an image of a battlefield landscape as an initial screen on the card placement panel 27 or the transmission screen so as to increase the stage effects.

### (Steps S2 and S3)

When the player P throws coins into the coin insertion device 29a, the coin sensor installed inside the coin insertion device 29a detects the inserted coins, and inputs a detection signal to the terminal device 24a via the I/O interface 45. The input signal analysis program P1b of the terminal device 24a examines the type of the input signal, and when it recognizes the signal as a coin insertion signal, the program activates the game start permission program P1d.

The game start permission program P1d gives permission (access) to play a game: That is, the program P1d counts the amount (number) of coins the player P has thrown into the coin insertion device 29a and stores the amount as a number of inserted coins in a memory region set in the RAM 44; adds the number of inserted coins in a region set in the RAM 44 provided for recognizing the amount of stored coins; and decides whether the amount of stored coins covers the fee (credit) for one game in step S3. If the program determines that the amount of stored coins covers the fee for one game, it gives permission to play the game, and the process goes to the next step S4. If the amount of inserted coins does not cover the credit, the process goes back to step S2.

According to the present invention, the game fee when a player P plays the game for the first time is a normal rate of, for example, three coins.

Also, according to the present game machine, when the player P plays the game and obtains a "victory" and tries the next "post-victory bonus game, " the fee for this post-victory bonus game is reduced to two coins. If the player P wins this first post-victory bonus game, and tries a second post-victory bonus game, the game fee this time will be one coin. Thus, when the player P obtains a series of victories (consecutive wins), the game fee for a game after the game in which the player has won is set at a reduced rate in accordance with the number of consecutive wins, until the number of consecutive wins reaches a predetermined number. If the player P plays a game and loses it, the normal fee mentioned above is applied to the fee for a next game. Therefore, in step S3, the normal rate is applied to the game fee.

### (Step S4)

As the amount of stored coins covers the fee for one game, the game start permission program P1d deduces the number of coins corresponding to the credit of the game which is going to be played from the amount of stored coins stored in the RAM 44, and stores the new amount of stored coins obtained by the deduction in the RAM 44. This processing is performed for allocating any remaining coins to the fee for a next game, in the event that the player P may have inserted more coins than necessary for the normal fee.

### (Step S5)

Next, the player P inserts his/her IC card 25 into the IC card read/write device 29. When a signal indicating insertion of an IC card 25 is inputted, the main control program P1a activates the IC card read/write program P2a to store the information recorded on the IC card 25 into the RAM 44. The program then displays a mode selection screen for the game on the monitor 28 and allows the player P to select a mode of the game to be played. This game mode selection is a selection of whether the player wishes to play a match game with another player operating one of the other terminal devices 24b or the like as the opponent, or to play a game alone with the terminal device 24a (computer) he/she is seated at as the opponent. The main control program P1a performs processing as required in accordance with the selected mode.

### (Step S6)

In step S6, the player P places a card 17 on the card placement panel 27 to start the battle game. When the card 17 is placed on the card placement panel 27, the main control program P1a activates the card data read program P2c to image the data represented by the code pattern 170 recorded (printed) on the back side of the card 17 with the infrared light camera 5, and stores the imaged data in the RAM 44. The card data read program P2c processes the binary or gray level image of the code pattern 170 read into the RAM 44 to decode the ID code or the like printed on the back side of the card 17. The ID code provides data that indicates the type of the troop allocated to each card 17, as described above.

### (Steps S7 and S8)

In step S7, the main control program P1a activates the setup screen control program P5b to display a screen on the monitor 28 which allows the player P to select a strategy to be used in the battle, and stores the strategy selected by the player P in the RAM 44. Next, in step S8, the setup screen control program P5b displays a battle area in a war-torn continent where the battle will take place in the game for a preset period of time on the monitor 28.

### (Step S9)

In step S9, the battle preparation screen control program P5c displays a screen on the monitor 28, which introduces the warlord or the like whom the player P is going to fight a battle against. If the opponent of the player P is another player who is operating another terminal device 24b (to 24h), the information regarding the card 17 placed on the card placement panel 27 of the terminal device 24b is transmitted to the terminal device 24a of the player P, and displayed on the monitor 28. If the player P has chosen the terminal device 24a as his/her opponent, then the main control program P1a selects one of the warlords recorded in the RAM 44 and sets the same as the opponent of the player P to fight against.

Next, the battle preparation screen control program P5c displays a card placement screen on the monitor 28, in which the cards 17 which will be used in the battle by the player P are arranged as placed on the card placement panel 27.

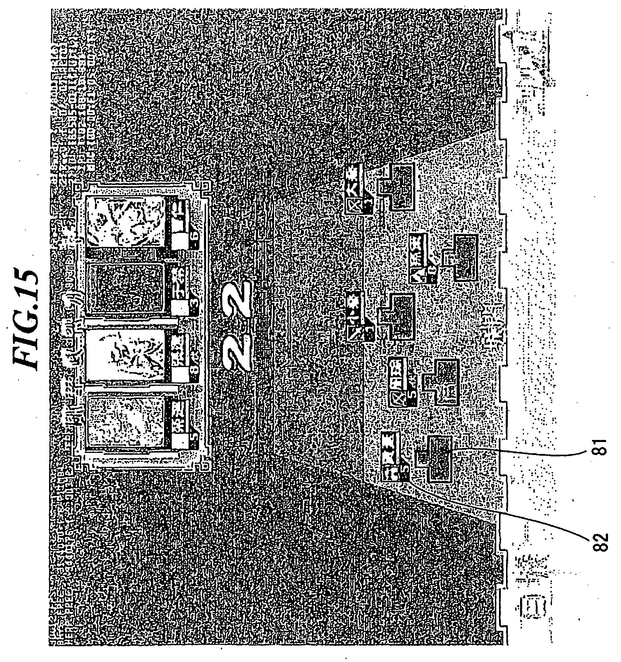

Fig. 15 shows one example of the card placement screen mentioned above. As shown in Fig. 15, in the image, in which the player's fort is positioned on the front side (lower part of the screen) and the enemy's fort is positioned on the farther side (upper part of the screen), outlines 81 of troops and captions 82 including their icons, names, and characteristics are displayed in accordance with the positions of the placed cards 17. Fig. 15 indicates that the player P has placed five cards 17 on the card placement panel 27.

### (Step S10)

Next, when the player P moves a card 17 on the card placement panel 27 in a sliding manner, the battle is started, and the battle screen control program P5d activates the screen projection control program P5f to project a battle screen such as the one shown in Fig. 16 on the card placement panel 27.

The main screen 83 shown in Fig. 16 shows a zoomed-in image of the battle situation including captions 82 indicating the troops represented by the cards 17 and images of soldiers of the troops. In a sub-screen 84 is displayed the deployment of all the cards (troops) 17 in the entire battle area. During the display of the battle screen, the sound output control program unit P6 outputs sounds and sound effects from the speaker 50 to imitate the atmosphere of combat at each stage. Each time a card 17 is moved on the card placement panel 27 in a sliding manner, a battle is fought against the enemy's troop(s), and images of the battle scenes projected on the card placement panel 27 are changed one after another during the battle in accordance with the processing of the troop control program unit P3 and the tactics control program unit P4. This allows the player P to play the game moving around the cards 17 on the card placement panel 27 with the images of battle scenes projected thereon, which provide high realistic sensation.

I f the opponent of the player P is another player who is operating another terminal device 24b (to 24h), when the player P moves a card 17 on the card placement panel 27 in a sliding manner, data on that movement and the like is transferred to the opponent's terminal device and displayed as a battle screen on the card placement panel 27.

As mentioned before, the visible light diffusion sheet member 12 that forms part of the card placement panel 27 is formed with a fine surface concavo-convex structure 12a that includes flat or spherical tops. This fine concavo-convex structure 12a allows smooth movement of the card 17 when it is slid on the visible light diffusion sheet member 12 of the card placement panel 27 and smooth removal of the card 17 from the visible light diffusion sheet member 12. The concavo-convex structure 12a also has the function of diffusing external light such as a room light, providing the effect of making the images projected on the card placement panel 27 clear.

### (Step S11)

The tactics execution program P4c determines the outcome of the battle game which has been fought using the cards 17 in step S10 as described above, and records data on the battle results including the outcome of the battle in the RAM 44. The outcome of the battle game is determined, for example, in the following manner.

A hundred hit points, for example, are given to the player P and his/her opponent at the start of the battle, and the values of the hit points are displayed on the game screen. As the player moves around the cards 17 to attack the enemies into their fort and gives damage to the opponent's troops, the hit points of the opponent decrease in accordance with predetermined rules. This way, one of the players whose hit points have reached zero first loses the game. If their hit points have reached zero at the same time, both of the player P and his opponent lose the game. Or, as time is counted down after the start of the battle, the player who has more hit points when time is up is determined to be the winner, and if the hit points are the same (draw), both of the players are determined to have lost the game.

In step S11, too, as means of counting the number of games played by the player P, a "1" is added to a region in the RAM 44 (hereinafter a "flag indicating the number of games played").

Furthermore, if the tactics execution program P4c determines that the player P has obtained a victory, a "1" is added to a region in the RAM 44, as means of counting the number of consecutive wins (hereinafter a "flag indicating the number of consecutive wins"). Also, as means of recording the outcome of each game, the outcome of each game is recorded in a region in the RAM 44 (hereinafter "outcome flag"). For example, a "2" for a win, and a "1" for a loss, is stored in the outcome flag.

### (Steps S12 and S21)

In step S12, the main control program P1a determines whether or not the value of the flag indicating the number of consecutive wins recorded in the RAM 44 has reached a predetermined upper limit V of, for example, 3. That the number of consecutive wins has reached the upper limit V means that the player P has put down (conquered) the entire continent, i.e. , fully cleared the game. If the number of consecutive wins has reached V, the process goes to step S21, where the setup screen control program P5b displays a screen which presents a successful conquest on the monitor 28 for a preset period of time, after which the process goes on to step S22.

### (Step S13)

In step S13, the main control program P1a determines whether the player P has won or lost the game which has been played, and if the player has won, the process goes to the next step S14, and if the player has lost, the process goes to step S22 (see Fig. 14). Whether the player P has won or lost the current game can be determined by referring to the outcome flag stored in the RAM 44 in step S11.

### (Step S14)

As it has been determined that the player P has obtained a victory in the current game in step S13, processing is done in step S14 to display a staged image of the player's victory, as well as a query screen asking the player P whether or not he/she wishes to try a next game (post-victory bonus game), on the monitor 28.

This "post-victory bonus game" means that, when the player P wins a game and tries another game, the fee for the next game is set lower than the normal fee, as described above. In the post-victory bonus game, a game screen with a combat scene in a different battle area (region) may be displayed, and the challenge level for obtaining a victory may be set changeable. The staged image of the player's victory may be for example an image of the enemy's fort being destroyed, which is displayed for a preset period of time, this being done by the main control program P1a activating the setup screen control program P5b.

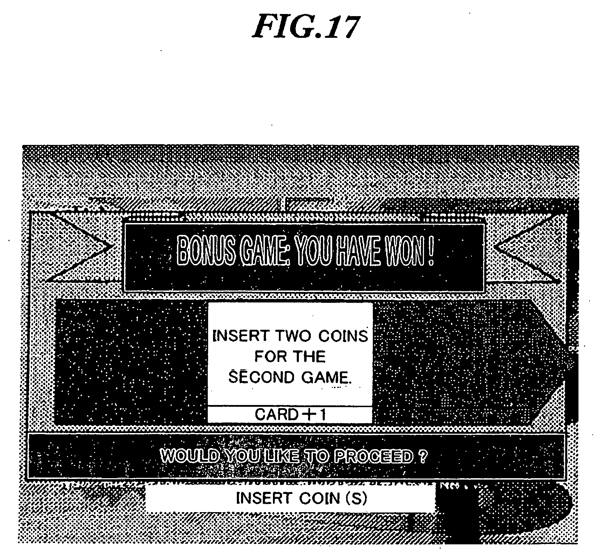

Next, in step S14, the setup screen control program P5b displays a screen which notifies the player P of the fact that he/she has obtained the right to try the post-victory bonus game and which asks him/her whether or not he/she wishes to try the post-victory bonus game, on the monitor 28, as shown in Fig. 17. This notification may be given to the player P with a sound.

The main control program P1a controls such that, when displaying the screen shown in Fig. 17, it is also displayed how many times it is that the player P has won and tries a next post-victory bonus game, and the fee (number of coins) for the game. The example shown in Fig. 17 indicates that the player has won once and may try the game for a second time (first post-victory bonus game), and that the player needs two coins to play the game. The game fee for trying this post-victory bonus game is set at a reduced rate in accordance with the number of consecutive wins which the player P has obtained, as described above.

This reduced rate may be set in a following manner by the game fee setting program P1c. In the game fee setting program P1c are preliminarily registered constants representing the numbers of coins (credit) necessary for playing a game after the game in which the player has won, i.e., a post-victory bonus game, for each number of consecutive wins R (= 0, 1, 2, ...V-1). Thereby, the game fee setting program P1c can determine a reduced fee for a post-victory bonus game that is going to be played next in accordance with the number of consecutive wins previously obtained, by referring to the flag value that indicates the current number of consecutive wins stored in the RAM 24.

### (Steps S15 and S16)

In step S15, the main control program P1a starts the timer 29b to start counting time. In step S16, the program determines whether time is up before the player P presses the start button after inserting a necessary number of coins as the game fee which has been set in step S14 so as to try a post-victory bonus game. That is, the program counts the time until the player P inserts coins corresponding to one credit and presses the start button which confirms the selection to try the post-victory bonus game. The time limit is set, for example, ten seconds. If time is up, a "9", for example, is written in the outcome flag and the process goes to step S22. A "9" in the outcome flag indicates that the player P has chosen not to try the post-victory bonus game.

### (Steps S17 and S18)

In step S17, similarly to step S2 described above, the game start permission program P1d counts the number of coins that the player P has thrown into the coin insertion device 29a. Then, in step S18, with similar processing in step S3 described above, it is determined whether or not the amount of coins inserted by the player P covers the credit for playing the post-victory bonus game. If the coins do not cover the credit for playing the post-victory bonus game, the process goes back to step S16.

### (Step S19)

As it has been determined that the amount of coins inserted by the player P covers the credit for playing the post-victory bonus game in step S18, the main control program P1a causes the process to go back to step S16 repeatedly until the player presses the start (try) button which confirms the selection to try the post-victory bonus game. When a signal indicating that the start button has been pressed is inputted, the process goes to step S20.

### (Step 20)

In step 20, as the player P has chosen to try the post-victory bonus game, the area where the battle will take place in the next post-victory bonus game is renewed, and the process goes to step S8, and the post-victory bonus game is played.

### (Step S22)

In step S22 shown in Fig. 14 , the result display screen control program P5e displays the battle result of the game which has just been played on the monitor 28. Next, the main control program P1a activates the IC card read/write program P2a, and writes the battle result of the current game which was stored in the RAM 44 in step S11, as well as data (experience points) in accordance with the battle result of a previous, if any, post-victory bonus game on the IC card 25. Thus, this data recorded on the IC card 5 is read out when the player P plays a game next time to obtain data necessary for another game.

### (Step S23)

In step S23, the main control program P1a activates the card issuing device control program P2e to issue a new card 17 from the card issuing device 30. The new card 17 is provided to the player P so that the player P can use it when he/she plays a next game. The card game system 21 of the embodiment of the present invention issues one new card 17 to the player P for one game, but the machine controls new cards 17 to be issued collectively in accordance with the number of games the player P has played.

### (Step S24)

In step S24, a "0" is recorded in the flag indicating the number of games played, the flag indicating the number of consecutive wins, and the outcome flag which are stored in the RAM 44 as described above, to clear the flags.

### (Steps S25 and S26)

In step S25, the main control program P1a displays a screen on the monitor 28 to ask the player P whether or not he/she wishes to play another game (continue). If the player P chooses to play another game by operating the select buttons 31, the process goes back to step S2.

If the player P chooses not to play another game, the process goes to the next step S26, where processing is done to end the game. For example, the main control program P1a activates the IC card read/write program P2a to eject the IC card 25 from the IC card read/write device 29, and a "game over" screen is displayed on the monitor 28. When this processing of step S25 is complete, the player's current game ends. The player's IC card 25, purchased cards 17, and newly obtained cards 17 can be used when the player P plays a game next time.

The embodiment of the game machine of the present invention described above has been described as a battle game set in a war-torn era by way of example, but the present invention can also be applied to sport card games such as football simulation games.

The present invention can also be applied to a game in which a play item such as a card is issued irrespective of the game results after the game has been played by a plurality of players. The outcome of a game, a win or a loss, can be applied to both game modes in which players compete against each other or players cooperate with each other to fight against the computer (CPU).

Furthermore, the game machine of the present invention is applicable to a game which is played with shaped articles such as figures, with stickers or the like printed with coded information stuck on the back side of the figure stand. For such a game which uses shaped articles, a device which issues such shaped articles is provided in place of the card issuing device 30 shown in Fig. 5.

The game machine using the transmission screen of the present invention can be used for other applications other than the table-type projector/imaging device described above. For example, the table-type projector/imaging device shown in Fig. 1 may be oriented in a 90-degree (or approximately 90-degree) rotated position so that the transmission screen 8 is arranged vertically on the housing. In this case, inside the housing are arranged the projector 3, the mirror 7, and either an infrared light imaging device 5 that images the infrared light emitted onto the transmission screen 8 at an angle of view that covers approximately the entire screen 8, or, infrared light detecting means that outputs coordinates of the infrared light detected from approximately the entire transmission screen 8.

With a game machine having the transmission screen 8 arranged vertically as described above, infrared light is emitted through the transmission screen 8 from outside the housing using infrared light emission means at the tip of a pointing device or the like, and the infrared light is detected by either the infrared light imaging device 5 or the infrared light detecting means mentioned above inside the housing, so as to determine the coordinates of the projected position of the infrared light on the transmission screen 8.

With the game machine described above, too, as the transmission screen according to the present invention is provided with a layer formed of carbon-free inks of cyan, magenta, and yellow to absorb most visible light, ambient visible light is absorbed to some extent and the black of the image projected by the projector is reproduced exactly, while infrared light is passed through and precisely received or detected by the infrared light imaging device 5 or the infrared light detecting means. Inanyof the game machines described above, the mirror can be omitted if the projection distance or imaging

(detecting) distance from the screen can be provided sufficiently in a straight line.

## Claims

1. A game machine (1) having an image projection device (3) that comprises:
a housing (2) having an upper panel constituting a transmission screen (8) configured so that an image, projected from inside the housing (2) can be seen from outside the housing (2), the transmission screen including at least a visible light absorption layer (11) formed of carbon-free mixed inks of cyan, magenta and yellow and having a fine concavo-convex surface (12a) configured so that play items (17), each having a code pattern at a bottom face thereof, can readily slide with reduced friction along the surface of the upper panel and can be readily removed from the surface of the upper panel;
memory means (13) in which image data configured to provide a variety of images relevant to a game to be played on the game machine is stored;
a projector (3) disposed in the housing (2) and configured to project the image on the upper panel;
infrared light emission means (6) disposed in the housing (2) and configured to provide infrared light through the upper panel, so as to illuminate with the infrared light the bottom faces of the play items (17) when placed on the upper panel;
infrared light detecting means (5) disposed in the housing (2) and configured to detect infrared light reflected from the bottom faces of the play items (17) inside the housing (2) through the upper panel constituting the transmission screen (8); and
a control unit (14) configured to analyse data indicative of respective play items placed on the upper panel based on the code patterns detected by the infrared light detecting means (5), to control progress of a game based on the analysed data indicative of the respective play items (17), to control progress of the game using the play items (17) placed on the upper panel and to cause the projector (3) to project to the upper panel the image which is generated based on data selected from the data of the variety of images stored in the memory means (13) in accordance with a progress of the game.

2. The game machine according to claim 1, the image projection device further comprising a mirror arranged inside the housing for reflecting the light emitted from the projector towards the upper panel operating as the transmission screen, and for reflecting the infrared light from the upper panel to a direction towards the infrared light detecting means.

3. The game machine according to claim 1, wherein the upper panel constituting the transmission screen comprises:
a transparent plate base material;
a light diffusion layer formed on an upper face of the plate base material configured to diffuse light;
the visible light absorption layer formed on an upper face of the light diffusion layer; and
a light diffusion sheet member provided on an upper face of the visible light absorption layer configured to diffuse external light from outside the game machine.

4. The game machine according to claim 1, wherein the projector is provided with a filter configured to cut infrared light contained in the light emitted from the projector.

5. The game machine according to claim 3, wherein the light diffusion sheet member is formed with the fine concavo-convex structure on the surface thereof.

## Patentansprüche

1. Spielmaschine (1), die ein Bildprojektionsgerät (3) hat, welche aufweist:
ein Gehäuse (2), welches eine obere Tafel hat, die einen Transmissionsschirm (8) bildet, der derart gestaltet ist, dass ein von innerhalb des Gehäuses (2) projiziertes Bild von außerhalb des Gehäuses (2) gesehen werden kann, wobei der Transmissionsschirm mindestens eine Absorptionsschicht (11) für sichtbares Licht einschließt, die aus kohlenstofffreien gemischten Tinten der Farben Cyan, Magenta und Gelb gebildet ist, und eine fein konkav-konvexe Oberfläche (12a) hat, die derart gestaltet ist, dass Spielelemente (17), die jeweils ein Codemuster auf einer Bodenfläche haben, leicht mit geringer Reibung längs der Oberfläche der oberen Tafel gleiten und leicht von der Oberfläche der oberen Tafel entnommen werden können;
eine Speichereinrichtung (13), in der Bilddaten gespeichert sind, die dazu konfiguriert sind, eine Mehrzahl von für ein auf der Spielmaschine zu spielendes Spiel relevanten Bildern bereitzustellen;
einen im Gehäuse (2) angeordneten und zur Projektion des Bildes auf die obere Tafel gestalteten Projektor (3);
eine Infrarot-Lichtemissionseinrichtung (6), die im Gehäuse (2) angeordnet und dazu ausgestaltet ist, infrarotes Licht durch die obere Tafel bereitzustellen, um so mit dem infraroten Licht die Bodenflächen der Spielelemente (17) zu beleuchten, wenn diese auf der oberen Tafel platziert sind;
eine Infrarot-Lichterfassungseinrichtung (5), die im Gehäuse (2) angeordnet und so ausgestaltet ist, dass sie von den Bodenflächen der Spielelemente (17) durch die den Transmissionsschirm (8) bildende obere Tafel nach innerhalb des Gehäuses (2) reflektiertes infrarotes Licht erfasst; und
eine Steuereinheit (14), die dazu ausgebildet ist, Daten, beruhend auf den durch die Infrarot-Lichterfassungseinrichtung (5) detektierten Codemustern, zu analysieren, die die auf der oberen Tafel platzierten jeweiligen Spielelemente kennzeichnen, einen Fortschritt des Spiels auf der Basis der die jeweiligen Spielelemente (17) kennzeichnenden analysierten Daten zu kontrollieren, den Fortschritt des Spiels unter Benutzung der auf der oberen Tafel angeordneten Spielelemente (17) zu kontrollieren bzw. zu steuern und den Projektor (3) zu veranlassen, auf die obere Tafel das Bild zu projizieren, welches aufgrund von Daten erzeugt wird, die aus den Daten der Vielzahl von Bildern, die in der Speichereinrichtung (13) gespeichert sind, gemäß einem Fortschritt des Spiels ausgewählt sind.

2. Spielmaschine nach Anspruch 1, wobei die Bildprojektionseinrichtung weiter einen Spiegel aufweist, der innerhalb des Gehäuses angeordnet ist, zum Reflektieren des vom Projektor emittierten Lichts zur oberen Tafel, die als Transmissionsschirm arbeitet, und zum Reflektieren des Infrarotlichts von der oberen Tafel weg in eine Richtung zur Infrarot-Lichterfassungseinrichtung.

3. Spielmaschine nach Anspruch 1, wobei die obere Tafel, die den Transmissionsschirm bildet, aufweist:
ein transparentes Grundplattenmaterial;
eine auf der oberen Fläche des Grundplattenmaterials gebildete Lichtdiffusionsschicht, die zum Zerstreuen von Licht konfiguriert ist;
die auf einer oberen Fläche der Lichtdiffusionsschicht gebildete Absorptionsschicht für sichtbares Licht; und
ein Lichtdiffusions-Flächenelement, das auf einer oberen Fläche der Absorptionsschicht für sichtbares Licht vorgesehen und dazu gestaltet ist, äußeres Licht von außerhalb der Spielmaschine zu zerstreuen

4. Spielmaschine nach Anspruch 1, wobei der Projektor mit einem Filter versehen ist, welches so gestaltet ist, dass es im von dem Projektor emittierten Licht enthaltenes Infrarotlicht abschneidet.

5. Spielmaschine nach Anspruch 3, wobei das Lichtdiffusions-Flächenelement auf seiner Oberfläche mit der feinen konkav-konvexen Struktur gebildet ist.

## Revendications

1. Machine de jeu (1) ayant un dispositif de projection d'images (3) qui comprend :
un boîtier (2) ayant un panneau supérieur constituant un écran de transmission (8) configuré de telle façon qu'une image, projetée depuis l'intérieur du boîtier (2), peut être vue depuis l'extérieur du boîtier (2),
l'écran de transmission incluant au moins une couche d'absorption de lumière visible (11) formée d'encres dépourvues de carbone mélangées de couleur cyan, magenta et jaune et ayant une fine surface concave-convexe (12a) configurée de telle façon que des articles de jeu (17), ayant chacun un motif codé sur sa face inférieure, peuvent aisément coulisser avec une friction réduite le long de la surface du panneau supérieur et peuvent être aisément enlevés de la surface du panneau supérieur ;
des moyens à mémoire (13) dans lesquels sont stockées des données images configurées pour proposer une variété d'images en relation avec un jeu à jouer sur la machine de jeu ;
un projecteur (3) disposé dans le boîtier (2) et configuré pour projeter l'image sur le panneau supérieur ;
un moyen d'émission de lumière infrarouge (6) disposé dans le boîtier (2) et configuré pour envoyer de la lumière infrarouge à travers le panneau supérieur, de manière à illuminer avec la lumière infrarouge les faces inférieures des articles de jeu (17) lorsqu'ils sont placés sur le panneau supérieur ;
un moyen de détection de lumière infrarouge (5) disposé dans le boîtier (2) et configuré pour détecter la lumière infrarouge réfléchie depuis les faces inférieures des articles de jeu (17) à l'intérieur du boîtier (2) à travers le panneau supérieur constituant l'écran de transmission (8) ; et
une unité de commande (14) configurée pour analyser des données indicatives d'articles de jeu respectifs placés sur le panneau supérieur, sur la base des motifs codés détectés par le moyen de détection de lumière infrarouge (5), pour commander l'évolution d'un jeu sur la base des données analysées indicatives des articles de jeu respectifs (17), afin de commander l'évolution du jeu en utilisant les articles de jeu (17) placés sur le panneau supérieur et d'amener le projecteur (3) à projeter vers le panneau supérieur l'image qui est générée en se basant sur des données sélectionnées depuis les données de la variété d'images stockées dans les moyens à mémoire (13) en accord avec une évolution du jeu.

2. Machine de jeu selon la revendication 1, dans laquelle le dispositif de projection d'images comprend en outre un miroir agencé à l'intérieur du boîtier pour réfléchir la lumière émise depuis le projecteur vers le panneau supérieur faisant office d'écran de transmission, et pour réfléchir la lumière infrarouge depuis le panneau supérieur dans une direction vers le moyen de détection de lumière infrarouge.

3. Machine de jeu selon la revendication 1, dans laquelle le panneau supérieur constituant l'écran de transmission comprend :
un matériau de base transparent en plaque ;
une couche de diffusion de lumière formée sur une surface supérieure du matériau de base en plaque et configurée pour diffuser la lumière ;
la couche d'absorption de lumière visible formée sur une face supérieure de la couche de diffusion de lumière ; et
un élément de diffusion de lumière en feuille prévu sur une face supérieure de la couche d'absorption de lumière visible et configuré pour diffuser la lumière externe depuis l'extérieur de la machine de jeu.

4. Machine de jeu selon la revendication 1, dans laquelle le projecteur est doté d'un filtre configuré pour couper la lumière infrarouge contenue dans la lumière émise depuis le projecteur.

5. Machine de jeu selon la revendication 3, dans laquelle l'élément de diffusion de lumière en feuille est formé avec la fine structure concave-convexe sur sa surface.
